# EUROPEAN PATENT APPLICATION

(11) **EP 4 629 081 A1**
(43) Date of publication of application: **08.10.2025**
(21) Application number: 25167421.4
(22) Date of filing: 31.03.2025
(51) Int. Cl.: G06F 9/50, G06F 9/54, G06F 11/16

(54) **REDUNDANT ARRAY OF PROCESSING PIPELINES**

(30) Priority: 03.04.2024 US 202418625455
(71) Applicant: Chicago Mercantile Exchange Inc., Chicago IL Illinois 60606 (US)
(72) Inventor: Singh, Inderdeep, Chicago, 60606 (US); Martinez, Maximiano J, Chicago, 60606 (US)
(74) Representative: Boult Wade Tennant LLP

(57) **Abstract**

A system includes a sequencer server instance, transaction processing server instances, and an arbiter server instance to provide resiliency. The sequencer server instance sequences and forwards a copy of an incoming request message to transaction processing server instances. Each of the transaction processing server instances processes the copy of the incoming sequenced request message, generates a sequenced result message, and transmits the sequenced result message to an arbiter server instance. The arbiter server instance receives one or more of the sequenced result messages having the same unique identifier, selects a sequenced result message from among the one or more of the received sequenced result messages based on a selection algorithm which determines the earliest received identical sequenced result messages received from a majority of the transaction processing server instances of a single subset of the transaction processing server instances, and transmits the selected sequenced result message to a recipient.

## Description

### BACKGROUND

Resiliency is the ability of an application or system to recover and continue to operate effectively despite infrastructure or service disruptions, dynamically acquire computing resources to meet demand, and mitigate disruptions such as natural catastrophes, data center malfunctions, misconfigurations, and network issues. Resiliency may be defined in terms of metrics called Recovery Time Objective (RTO) and Recovery Point Objective (RPO). RTO is the maximum acceptable time delay between the interruption of service and restoration of service that the application can tolerate. RPO is a measure of an acceptable maximum data loss that the application can tolerate.

In particular, RPO may be generally defined as the maximum amount of data - as measured by time or the number of transactions - that can be lost after a recovery from a disaster, failure, or comparable event before data loss will exceed what is acceptable to an organization. An RPO determines, for example, the maximum age of the data or files in backup storage needed to be able to meet the objective specified by the RPO, should a network or computer system failure occur. An organization's loss tolerance, or how much data it can lose without sustaining significant harm, is related to RPO, and may be set forth in the organization's business continuity plan (BCP). This also dictates procedures for disaster recovery (DR) planning, including the acceptable backup interval, because it refers to the last point when the organization's data was preserved in a usable format. For example, an RPO of 60 minutes requires a system backup every 60 minutes. Often, high-priority applications demand tighter RPOs, which will require more frequent backups. For example, an RPO of 0 to 1 hour may be specified for critical operations that cannot afford to lose over an hour of data, i.e., they are dynamic, high volume, and difficult or impossible to recreate due to the number of variables involved. Patient records, banking transactions, and customer relationship management (CRM) systems all fall within this tier.

In some applications, such as electronic financial trading, electronic commerce and other applications, regulatory requirements may specify the degree to which data loss is acceptable. For example, a regulatory agency, such as the Commodity Futures Trading Commission (CFTC), may specify an RPO of 30 seconds for financial transaction processing systems. Further, in these applications, deterministic behavior, e.g. the order in which operations and/or messages are processed, is important, electronic messaging services may be required to ensure that a set of electronic messages related by their ordering that are queued for electronic communication/delivery to subscribers/consumers are all delivered to any single subscriber/consumer or otherwise consumed, by one or more subscribers/consumers, in a particular order, e.g. the order in which they were placed into the queues by the publisher/producer and/or the same order as delivered to/consumed by another consumer.

For example, a business transaction may be defined as one or more operations or acts which are undertaken according to one or more associated business rules (including industry, legal or regulatory requirements or customs) to accomplish a business or commercial purpose, which may include compliance with industry, regulatory or legal requirements. A business transaction may be implemented by one or more computer processing and/or database operations/program steps, which themselves may be referred to as transactions. Business transactions, as defined by the associated business rules, may be characterized as deterministic in that they can be characterized by an interdependency or relationship which affects their result, such as a dependency on the order in which they are processed, such as a temporal order, and/or a dependency on real time processing, as defined by business rules, so as to effect the business/commercial purpose and/or meet participant expectations, referred to herein as "transactional determinism." Generally, a set of deterministic transactions will provide a particular result when executed in one order and a different result when executed in a different order. Accordingly, messages related to such transactions may need to be communicated and consumed in a particular order to ensure an expected and/or consistent result of the subsequent processing thereof.

In proprietary implementations of an application/system implemented in private data center environments where the operator has full control over the hardware which hosts the application/system, software, geographic locations, etc. of their implementation, latency issues may be mitigated/accounted for in devising an acceptable disaster recovery plan designed to minimize recovery/down time and mitigate, if not eliminate, potential data loss, i.e., an RPO and an RTO of zero.

However, shared, or multi-tenant implementations, sometimes referred to as "cloud" based environments, deployments, or implementations, are now becoming more prevalent, where computing resources are operated by a third-party vendor, remotely located, and offered as a service, such as via virtual computing systems, e.g. host machines, which "host" the operator's application/system. Such services are advantageous as they can mitigate the cost of operating a proprietary data center: such as real estate, utility and staffing costs; they can provide additional computing resources dynamically/on demand, such as at peak load times; they offer additional computing resources to ensure reliability, availability and serviceability; and they often operate multiple geographically disparate data centers offering reduced latency to customers located in different geographic regions and/or increased redundancy/resiliency, and the like. A region may refer to an independent geographic area that consists of multiple zones. A zone may include a deployment area for resources within a region and each zone may represent a single failure domain within a region.

Specifically, the cloud environment is dynamic and includes a shared infrastructure over different geographical zones and regions that includes various elements of software below the application layer that manage the scheduling of network, network, memory, CPU time, and I/O available to the application. The shared infrastructure, e.g., Infrastructure as a service (IaaS), provides essential computing, storage, and networking resources on demand. In particular, the shared infrastructure offers virtual machines (VMs) or server instances that are hosted by one or more host computers, scalable storage solutions, and network components such as virtual networks, load balancers, and firewalls. The shared infrastructure may further provide a hypervisor or virtual machine monitor which includes software, firmware or hardware that creates and runs the VMs. The hypervisor may be executed by a host machine and enables the host machine to support multiple guest VMs by virtually sharing the host machine hardware's resources such as memory and processing. Further, an IaaS cluster configuration may be provided in which multiple VMs form a failover cluster and work together to provide high availability.

However, such advantages do not come without costs, e.g., a significant reduction in the ability of a customer/operator to control the hardware, software, and geographic locations of their application/system being hosted, as well as the backup systems therefore. For example, as the actual computing resources provided by the service are often shared with other customers, the overall processing loads on those resources may vary dynamically, both between different computing resources and over time, resulting in applications not being able to control workloads required by other applications or tenants.

Furthermore, as the processing loads may dynamically vary, so will the processing latencies. This may make accounting for overall latency differentials, including both communications and processing latency differentials, difficult when attempting to recover from a failure and synchronize the backup system to a recovery state since time can no longer be relied upon as a means of system processing alignment.

Third party vendors/cloud providers may offer service level agreements, including native backup system/disaster recovery solutions, but, owing to the nature of a cloud service as having to be able to cost-effectively service many customers with substantially varying needs, such solutions are often necessarily generic in their implementation and require compromises on the part of customers in terms of wider acceptable latency variations, increases in the amount of acceptable data loss in failure situations, increased down time, and the like.

As different applications and systems may be sharing the same hardware infrastructure, e.g., IaaS cluster, it is desirable for applications to be able to accommodate increases in demand and external factors such as cloud platform maintenance events, hardware failures, or auto scaling events that may be induced by multitenant applications that may force a pause on each application's process to ensure critical platform management tasks.

Accordingly, it is desirable to provide a system/application architecture specifically configured to ensure consistent performance, improved latency, determinism, resiliency (RPO and RTO of zero), and to enable continuous delivery of system/application upgrades over different geographical zones and regions in a multitenant infrastructure.

### BRIEF DESCRIPTION OF THE DRAWINGS

FIG. 1 depicts a computer network system, according to some embodiments.
FIG. 2 depicts a general computer system, according to some embodiments.
FIG. 3 depicts a block diagram of a system for providing resiliency in a cloud environment according to some embodiments.
FIG. 4 depicts a block diagram of a system for providing resiliency in a cloud environment according to some embodiments.
FIG. 5 depicts a block diagram of a system for providing resiliency in a cloud environment according to some embodiments.
FIG. 6 depicts a block diagram of a system for providing resiliency in a cloud environment according to some embodiments.
FIG. 7 depicts a block diagram of a system for providing resiliency in a cloud environment according to some embodiments.
FIG. 8 depicts a block diagram of a system for providing resiliency in a cloud environment according to some embodiments.
Fig. 9 depicts a block diagram of a system for providing resiliency in a cloud environment according to some embodiments.
Fig. 10 depicts a block diagram of a system for providing resiliency in a cloud environment according to some embodiments.
FIG. 11 depicts a block diagram of a system for providing testing in a cloud environment according to an alternate embodiment.
FIG. 12 depicts a block diagram of a system depicts a block diagram of a system for providing a step behind pipeline according to an alternate embodiment.
FIG. 13 depicts a flow chart showing the operation of the system of Figures 3-5.
FIG. 14 depicts a block diagram of a system for providing resiliency according to some embodiments.

### DETAILED DESCRIPTION

The disclosed embodiments relate to a system/process which provides resiliency, consistent performance, determinism, and continuous delivery to a transaction processing system that processes transactions received from one or more sources and generates results/outputs based thereon for communication to one or more recipients/destinations/consumers in a shared infrastructure, e.g., a "cloud" environment.

As will be discussed, the disclosed embodiments relate to a data transaction processing system architecture that includes a sequencer, an arbiter, and multiple physically, e.g. geographically, and/or logically distinct or otherwise separated, processing pipelines, or groups/arrays thereof, that perform all (e.g., for resiliency, continuous delivery, and consistent performance) or some (e.g., for, testing, bug detection, and recovery) of the same tasks. For example, an array of processing pipelines, deployed in accordance with the disclosed embodiments, may be configured to independently arrive at the same results based on a given shared set of inputs, e.g., to implement a deterministic system, or for redundancy in a cloud environment.

The disclosed data transaction processing architecture may be specifically configured to manage inconsistent demand, and dynamic resource availability due to external factors/forces in a cloud environment including hypervisor latency, noisy tenants, platform maintenance, hardware failures, and continuous delivery, each of which is further explained below.

In cloud environments, hypervisor latency may be caused by installing and running a hypervisor which creates an automatic overhead of about 5 to 10% on the server resources. Slight latency and packet delays are common when relying on a VM server.

Since cloud environments allow for multiple tenants in the same VM server, a resource-heavy system/application implemented on a given server may impact other applications running on that same server which may experience performance issues, e.g., due to contention for resources. Therefore, applications installed in cloud environments are not necessarily able to guarantee or control the portions of shared resources available to them due to the consumption thereof by other applications or tenants.

Third party vendors perform platform maintenance activities in cloud environments to keep the machine hosts healthy such as installation of critical security patches or upgrading services. These maintenance tasks may also consume some of the resources of the systems on which tenant applications are running, resulting in a reduction, temporary or permanent depending on the nature of the maintenance, in the resources allocated thereto. In addition, sometimes a service upgrade results in multi-region outages. Therefore, there may be occasions in which providing performance consistency is challenging due to, for example, a regional service outage which encompasses a complex event that is out of the control of the applications.

Since the hardware infrastructure is implemented in the cloud, applications may not have the ability to detect hardware degradation in advance so as to be able to take remedial actions before a severe hardware fault or failure happens.

One of the key advantages of the cloud, however, is the elastic nature of the infrastructure provided thereby that enables continuous delivery of upgrades to the application and to run multiple parallel versions of the applications and switch between them to perform version upgrades in a seamless manner to the customer. However, the switchover may vary from small and seamless to disruptive both in terms of the performance glitches when switching over as well as undiscovered bugs that arise from quick cycles in agile delivery models. Bugs should be rolled back seamlessly and without impact to the customer.

The disclosed embodiments provide improved performance consistency, determinism, and resiliency and may achieve an RPO and an RTO of zero for applications, such as the electronic trading system described herein. Further, the disclosed embodiments provide automated multi-zonal and regional service to handle application failure and recovery in line. Additionally, the disclosed embodiments support zero downtime deployments and automated bug detection and recovery, e.g., utilizing a 1-step behind pipeline.

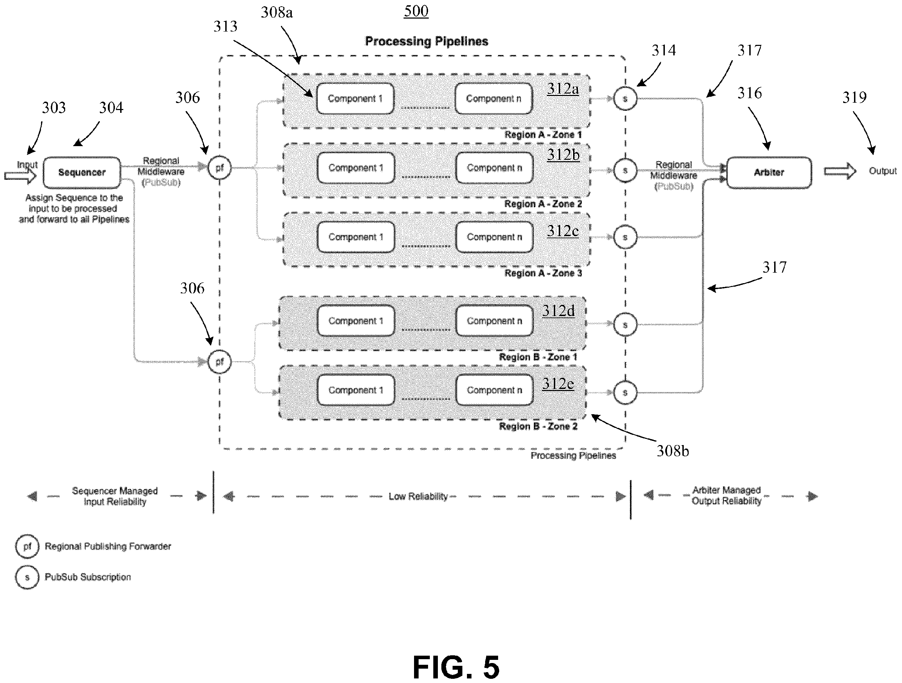

In one implementation, as shown in Fig. 5, the disclosed transaction processing system/architecture 500 includes a sequencer 304, redundant arrays of processing pipelines 312, and one or more arbiters 316. The sequencer 304 receives, sequences, and transmits orders to the pipelines 312 for processing. The cloud based architecture may support the use of multiple pipelines 312 to serialize processing of single transactions and parallelize processing of different transactions to increase accuracy and consistency of processing. In the case that throughput and speed need to be prioritized over accuracy, redundant pipelines 312 can be removed or ignored in a flexible manner. One or more arbiters 316 then select between various outputs of the pipelines 312, ignoring and discarding outputs from pipelines 312 that are, for example, slow or failed, or outputs that have inconsistent results are compared to other processes. This electronic trading architecture 500 may reduce or eliminate the impact of errors from machines that fail, or experience performance degradation or interruptions as managed by the cloud provider. Further, the disclosed trading architecture 500 may enable testing of new products and features using a "blue-green deployment," a method of installing, releasing, or deploying changes to an application, database, server, etc. by swapping from a current/production version or implementation to a new/staging version or implementation. New features may be tested in certain pipelines and their effectiveness evaluated at the end of the processes. If the tested feature fails, other pipelines may backup the result, i.e., allow a rollback, to avoid affecting the clients while efficiently testing new versions.

An example of an application or system which may be implemented with the disclosed embodiments is an electronic transaction processing system, such as a trading system.

A financial instrument trading system or a transaction processing system, such as a futures exchange, referred to herein also as an "Exchange", such as the Chicago Mercantile Exchange Inc. (CME), provides a contract market where financial instruments, for example futures, options on futures and spread contracts, are traded among market participants, e.g., traders, brokers, etc.

Current financial instrument trading systems allow traders to submit orders and receive confirmations, market data, and other information electronically via a communications network. These "electronic" marketplaces, implemented by, and also referred to as, "electronic trading systems," are an alternative trading forum to pit based trading systems whereby the traders, or their representatives, all physically stand in a designated location, i.e., a trading pit, and trade with each other via oral and visual/hand based communication.

Typically, the Exchange provides for centralized "clearing" by which all trades are confirmed and matched, and open positions are settled each day until expired (such as in the case of an option), offset or delivered. Matching, which is a function typically performed by the Exchange, is a process, for a given order which specifies a desire to buy or sell a quantity of a particular instrument at a particular price, of seeking/identifying one or more wholly or partially, with respect to quantity, satisfying counter orders thereto, e.g. a sell counter to an order to buy, or vice versa, for the same instrument at the same, or sometimes better, price (but not necessarily the same quantity), which are then paired for execution to complete a trade between the respective market participants (via the Exchange) and at least partially satisfy the desired quantity of one or both of the order and/or the counter order, with any residual unsatisfied quantity left to await another suitable counter order, referred to as "resting."

In particular, electronic trading of financial instruments, such as futures contracts, is conducted by market participants sending trading orders, such as to buy or sell one or more futures contracts, in electronic form to the Exchange. These electronically submitted orders to buy, and sell are then matched, if possible, by the Exchange, i.e., by the Exchange's Transaction Processor (TP), also referred to as a match engine or matching engine, to execute a trade, with the results thereof being communicated to the market participants through electronic notifications/broadcasts, referred to as market data feeds. Outstanding (unmatched, wholly unsatisfied/unfilled, or partially satisfied/filled) orders are maintained in one or more data structures or databases referred to as "order books," such orders being referred to as "resting," and made visible, i.e., their availability for trading is advertised, to the market participants through the electronic notifications/broadcasts, i.e., market data feeds, as well. An order book is typically maintained for each product, e.g., instrument, traded on the electronic trading system and generally defines or otherwise represents the state of the electronic trading system and of the market for that product, i.e., the current prices at which the market participants are willing buy or sell that product. As such, as used herein, an order book for a product may also be referred to as a market for that product.

A market data feed, referred to as market data or market feed, is a compressed or uncompressed real time (with respect to market events), or substantial approximation thereof, electronic data/message stream provided via an electronic communications network, such as the Internet, by the Exchange directly, or via a third party intermediary. A market data feed may be comprised of individual electronic messages, each comprising one or more packets or datagrams, and may carry, for example, pricing or other information regarding orders placed, traded instruments and other market information, such as summary values and statistical values, or combinations thereof, and may be transmitted, e.g., multi-casted, to the market participants using standardized protocols, such as UDP over Ethernet. More than one market data feed, each, for example, carrying different information, may be provided. The standard protocol that is typically utilized for the transmission of market data feeds is the Financial Information Exchange (FIX) protocol Adapted for Streaming (FAST), aka FIX/FAST, which is used by multiple exchanges to distribute their market data. Pricing information conveyed by the market data feed may include the prices, or changes thereto, of resting orders, prices at which particular orders were recently traded, or other information representative of the state of the market or changes therein. Separate, directed/private, messages may also be transmitted directly to market participants to confirm receipt of orders, cancellation of orders and otherwise provide acknowledgment or notification of matching and other events relevant, or otherwise privy, only to the particular market participant.

The GLOBEX^{®} electronic trading system, offered by CME implements an electronic trading system/marketplace for trading futures and options (option contracts), referred to as Exchange Traded Derivative (ETD) options, on futures wherein the underlying is a futures contract for a particular underlier. They are listed and traded by Strike price and Expiry (daily, weekly, monthly, quarterly). ETD options physically expire into, i.e., upon expiration the contract delivers, the closest expiring future contract (typically a highly liquid, if not the most liquid, future contract) for the particular underlier, e.g., in the case of an ETD FX option, it is the closest quarterly expiring future contract. Then the futures contract is settled physically or via cash.

In particular, GLOBEX^{®} is an open access marketplace that allows participants to directly enter their own trades and participate in the trading process, including viewing the book of orders and real-time price data. GLOBEX^{®} has a number of core components/applications/engines or components including a transaction receiver processor (TR), e.g., a market segment gateway, a transaction processor (TP), e.g., a matching engine, a result generator (RG), e.g., a market data generator, and a transaction logger (TL) which includes a database that stores records for transactions for reporting, audit and historical purposes, each of which, in prior implementations, may be deployed in a distributed fashion, e.g., on different inter-networked physical servers. These components may be integrated, e.g., into a single system/transaction processing server instance or tightly coupled set thereof.

The following sequence describes how, at least in part, information may be propagated in an electronic trading system such as GLOBEX^{®}, through a series of electronic messages, and how orders may be processed:
(1) An opportunity is created at the TP, such as by placing a recently received but unmatched order on the order book to rest indicating a trader willing to trade a particular quantity at a particular price, i.e., an opportunity for another trader to trade therewith;
(2) The TP creates an update reflecting the opportunity and sends it to the RG via the network;
(3) The RG generates market data message based on the update and transmits it, e.g., using multicasting, or multiple unicast streams, or other mode of broadcasting via the network, the generated market data message to all of the market participants to advertise the opportunity to trade, i.e., transmits a broadcast market data feed message;
(4) The market participants evaluate the opportunity and each, upon completion of their evaluation, may or may not choose to respond with an order, i.e., a message containing their counter-order, responsive to the resting order, i.e., counter to the resting order for some or all of the available quantity, by transmitting the counter-order via the network to the TR;
(5) The TR receives any counter orders generated by the market participants, ascribes an ordering to each received order relative to the other received orders, sends confirmation of receipt back directly to each submitting market participant, and forwards the received orders to the TP via the network;
(6) The TP evaluates the received orders and matches, using for example, a price/time priority algorithm, the first suitable arriving order, based on the ascribed ordering, against the resting opportunity and a trade is executed. Depending upon the available quantity of the resting order and the quantity of the incoming order, one of the resting order or the incoming order may be fully satisfied with any remainder of either order being placed on the order book to rest, or cancelled, etc.
(7) The TP creates an update and sends it to the RG via the network.
(8) The RG generates a market data message based on the update and transmits the generated market data message to all of the market participants via the network.

As will be discussed, the disclosed embodiments are implemented, in some embodiments, so as to receive/intercept each incoming transaction communicated to the electronic trading system using a sequencer so as to sequence each incoming transaction by, for example, augmenting the received incoming transaction with a unique identifier which characterizes an order of receipt of the received incoming transactions relative to other prior or subsequently received incoming transactions.

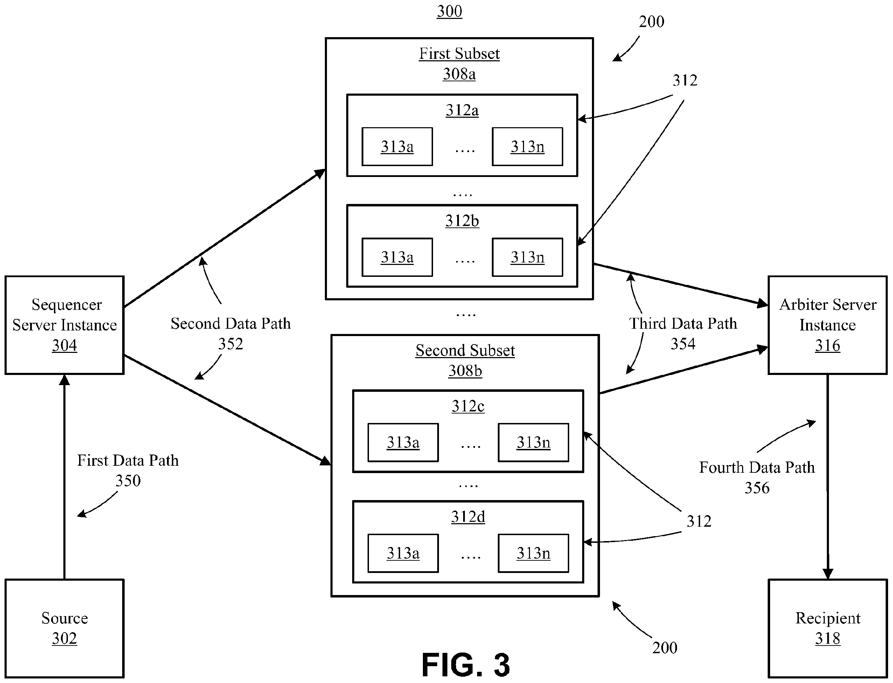

In particular, as shown in Figs. 3-5, incoming transactions, e.g. orders to trade, are processed by the sequencer 304 of the architecture which may augment each transaction with a unique identifier including time signal data, or data indicative of a time of receipt or time or sequence indicative of a temporal or sequential relationship between a received transaction and other received transactions. The time signal data may be based on, for example, a system clock or a sequence counter, etc. The sequencer 304 may additionally serialize, or otherwise sequence, the incoming transactions based on their order of receipt by the sequencer 304. In this manner, the sequencer 304 is the point of determinism for the system as each transaction is augmented with an indicium, such as a time stamp or other sequence encoding, indicative of its order of receipt relative to the other received transactions, ensuring their ordered processing thereafter.

The sequencer 304 generates copies of the sequenced transactions which may then be substantially simultaneously communicated, e.g. broadcasted, to each of the pipelines 312, which may be arranged in a plurality of arrays or subsets, and which may be intended to be redundant to each other. Each of the pipelines 312 then processes the corresponding copy of the sequenced transaction, based on the sequencing imparted by the sequencer 304, and determines a result. In some embodiments, the sequencer 304 may be located in the same region as at least one pipeline 312.

In some embodiments, each of the pipelines 312 implements various processing components coupled with each other, receives a copy of the sequenced transaction from the sequencer 304, processes the copy of the sequenced transaction using the processing components, generates a sequenced result message indicative thereof, and transmits the sequenced result message including the unique identifier to an arbiter 316.

In some embodiments, the arbiter 316 receives, from two or more arrays of redundant pipelines 312, one or more of the sequenced result messages having the same unique identifier, selects a sequenced result message from among the one or more of the received sequenced result messages based on a selection algorithm which, for example, determines the earliest received identical sequenced result messages received from a majority of the pipelines 312 of a single array of pipelines, and transmits the selected sequenced result message to a recipient 318 such as a recipient device, a client computer, a consumer, another sequencer 304 of another pipeline 312.

In one implementation, the disclosed embodiments may instantiate sets of pipelines 312 on demand and as needed within a region as well as across regions to address performance variations and to replace, augment, and compensate for slower and/or failed pipelines. In particular, the disclosed embodiments may address resiliency by replacing failed or slower pipelines. Further, the disclosed embodiments may deploy updates and modifications using continuous and rolling deployment of multiple pipelines 312 and address performance variations across different servers and regions.

The disclosed embodiments may be implemented in different architectures and configurations to achieve different goals. In some embodiments, to achieve a performance goal, at least two pipelines 312 deployed on different resources may be needed. In other embodiments, to address fault tolerance, sets or arrays of pipelines 312 may be located within a region or across regions. In other embodiments, to provide continuous delivery of upgrades to the system, multiple pipelines of different versions may be deployed wherein newer versions of pipeline 312 are validated prior to being designated as eligible to publish to downstream systems. These embodiments may be combined to create a system which maintains operational performance while providing both fault tolerance and enabling continuous delivery of upgrades to the system. For example, using multiple local and geographically distributed arrays/sets of redundant pipelines in accordance with an arbitration algorithm which assesses a given processing results based on the first received majority result may assure performance by relying on the first, i.e., fastest performing, set of pipelines to complete the processing of a given transaction, which may change over time, ensure fault tolerance by selecting the result on which the majority of those first responding pipelines agree, accounting for any failure, and ensure uninterrupted availability by relying on multiple arrays/set of pipelines to ensure reception of a processing result from at least one thereof.

The provision of redundant arrays of pipelines 312 for a transaction processing system which minimize, if not eliminate, both the amount of data, i.e., the number of transactions, which can be lost during a failure and the performance impact on the system is a technical implementation and problems therewith, such as data loss, processing and communications latency variation, processing performance degradation, are technical problems which can affect computer processes and systems which rely on electronic message based communication for operation. As such, the disclosed embodiments provide technical solutions to these technical problems.

The disclosed embodiments provide an improved system resiliency and disaster recovery mechanism for a deterministic transaction processing system which can adaptively accommodate temporary and chronic processing and communications latencies, particularly in a cloud/shared resource deployment, to mitigate data loss and performance impact while minimizing failure recovery costs, and therefore provide a specific and practical application which improves upon prior transaction processing platforms and provides additional functionality not previously provided.

The disclosed embodiments solve problems which uniquely arise in the fields of computer technology, electronic communication and transaction processing. The disclosed embodiments are rooted in computer technology in order to overcome problems specifically arising in computer systems in a cloud/shared environment. Indeed, the subject technology improves the functioning of the computer by, for example, using intra and inter-region redundant pipelined or deterministic sets/arrays of application instances to minimize, if not eliminate, both the amount of data, i.e., the number of transactions, which can be lost during a failure, the performance impact on the system, and the costs to recover in the event of failure.

While the disclosed embodiments may be described in reference to the CME, it should be appreciated that these embodiments are applicable to any exchange. Such other exchanges may include a clearing house that, like the CME clearing house, clears, settles and guarantees all matched transactions in contracts of the exchange occurring through its facilities. In addition, such clearing houses establish and monitor financial requirements for clearing members and convey certain clearing privileges in conjunction with the relevant exchange markets.

The disclosed embodiments are also not limited to uses by a clearing house or exchange for purposes of exchanging clearing related messages. The disclosed embodiments may also be used by other components to facilitate internal or external inter- or intra-process communication.

### COMPUTING ENVIRONMENT

The embodiments may be described in terms of a distributed computing system. The particular examples identify a specific set of components useful in a futures and options exchange. However, many of the components and inventive features are readily adapted to other electronic trading environments. The specific examples described herein may teach specific protocols and/or interfaces, although it should be understood that the principles involved may be extended to, or applied in, other protocols and interfaces.

It should be appreciated that the plurality of entities utilizing or involved with the disclosed embodiments, e.g., the market participants, may be referred to by other nomenclature, such as clearing firm or clearing entity, reflecting the role that the particular entity is performing with respect to the disclosed embodiments and that a given entity may perform more than one role depending upon the implementation and the nature of the particular transaction being undertaken, as well as the entity's contractual and/or legal relationship with another market participant and/or the exchange.

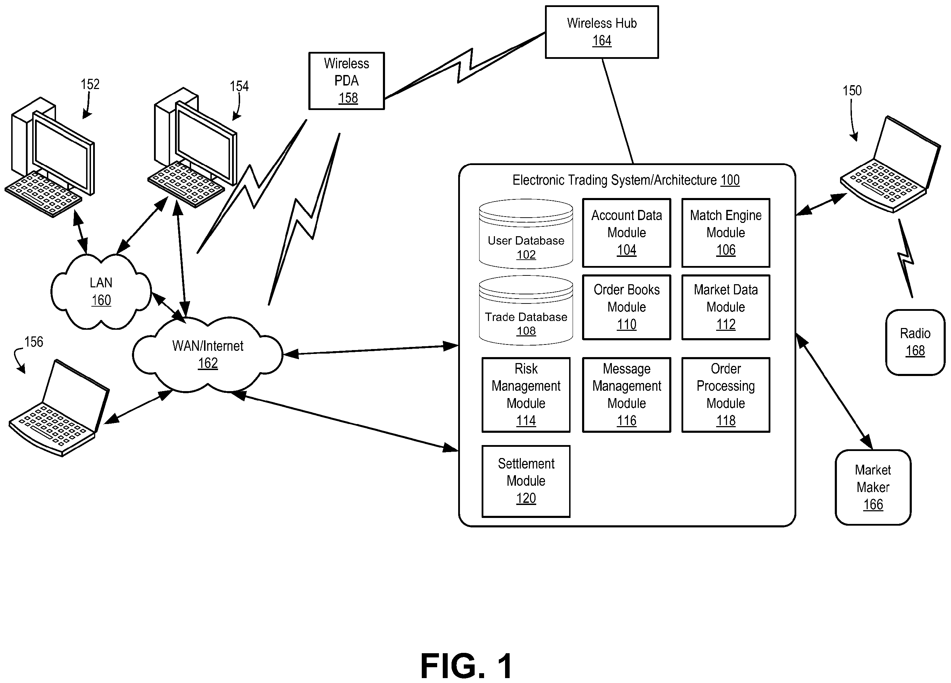

An exemplary trading network environment for implementing electronic trading systems and methods, including the functions of the clearing house described above, is shown in Fig. 1. In particular, Fig. 1 shows the core functions and modules of an electronic trading system 100, which, as will be described below, may be deployed in accordance with the disclosed embodiments. Any one or more of these functions, any one or more subsets of these functions or all of these functions may be implemented using the disclosed embodiments, i.e., multiple instances thereof wrapped between a sequencer 304 and an arbiter 316 as described and, for example, deployed in the cloud environment. Any function(s) or module(s) that is/are implemented between the sequencer 304 and the arbiter 316 may be configured to receive their inputs from a sequencer 304 and provide their results/outputs to an arbiter 316 as described.

The exchange computer system 100 receives messages that include orders and transmits market data related to orders and trades to users, such as via wide area network 162 and/or local area network 160 and computer devices 150, 152, 154, 156 and 158, as described herein, coupled with the exchange computer system 100.

Herein, the phrase "coupled with" is defined to mean directly connected to or indirectly connected through one or more intermediate components. Such intermediate components may include both hardware and software-based components. Further, to clarify the use in the pending claims and to hereby provide notice to the public, the phrases "at least one of <A>, <B>, ... and <N>" or "at least one of <A>, <B>, ... <N>, or combinations thereof" are defined by the Applicant in the broadest sense, superseding any other implied definitions herebefore or hereinafter unless expressly asserted by the Applicant to the contrary, to mean one or more elements selected from the group comprising A, B, ... and N, that is to say, any combination of one or more of the elements A, B, ... or N including any one element alone or in combination with one or more of the other elements which may also include, in combination, additional elements not listed.

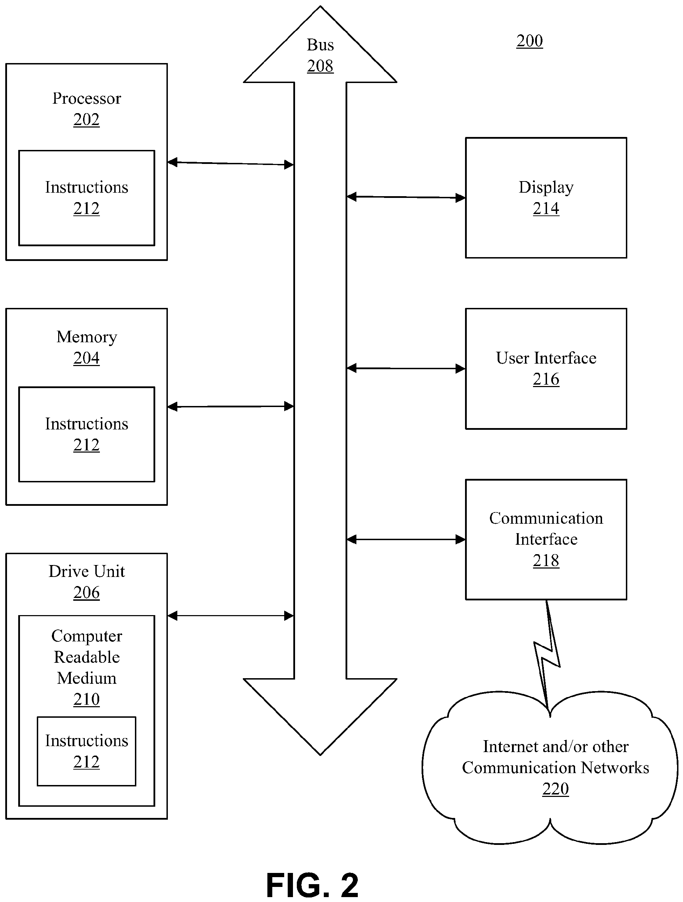

The exchange computer system 100 may be implemented with one or more mainframe, server, desktop, or other computers, such as the example computer 200 described herein with respect to Fig 2. A user database 102 may be provided which includes information identifying traders and other users of exchange computer system 100, such as account numbers or identifiers, usernames, and passwords. An account data module 104 may be provided which may process account information that may be used during trades.

A match engine module 106 may be included to match bid and offer prices and may be implemented with software that executes one or more algorithms for matching bids and offers. A trade database 108 may be included to store information identifying trades and descriptions of trades. In particular, trade database 108 may store information identifying the time that a trade took place and the contract price.

An order book module 110 may be included to compute or otherwise determine current bid and offer prices, e.g., in a continuous auction market, or also operate as an order accumulation buffer for a batch auction market.

A market data module 112 may be included to collect market data and prepare the data for transmission to users. For example, the market data module 112 may prepare the market data feeds described herein.

A risk management module 114 may be included to compute and determine a user's risk utilization in relation to the user's defined risk thresholds. The risk management module 114 may also be configured to determine risk assessments or exposure levels in connection with positions held by a market participant. The risk management module 114 may be configured to administer, manage, or maintain one or more margining mechanisms implemented by the exchange computer system 100. Such administration, management or maintenance may include managing a number of database records reflective of margin accounts of the market participants. In some embodiments, the risk management module 114 implements one or more aspects of the disclosed embodiments, including, for instance, principal component analysis (PCA) based margining, in connection with interest rate swap (IRS) portfolios, as described herein.

A message management module 116 may be included to, among other things, receive, and extract orders from, electronic data transaction request messages. The message management module 116 may define a point of ingress into the exchange computer system 100 where messages are ordered and considered to be received by the system. This may be considered a point of determinism in the exchange computer system 100 that defines the earliest point where the system can ascribe an order of receipt to arriving messages. The point of determinism may or may not be at or near the demarcation point between the exchange computer system 100 and a public/internet network infrastructure. The message management module 116 processes messages by interpreting the contents of a message based on the message transmit protocol, such as the transmission control protocol ("TCP"), to provide the content of the message for further processing by the exchange computer system.

The message management module 116 may also be configured to detect characteristics of an order for a transaction to be undertaken in an electronic marketplace. For example, the message management module 116 may identify and extract order content such as a price, product, volume, and associated market participant for an order. The message management module 116 may also identify and extract data indicating an action to be executed by the exchange computer system 100 with respect to the extracted order. For example, the message management module 116 may determine the transaction type of the transaction requested in a given message. A message may include an instruction to perform a type of transaction. The transaction type may be, in one embodiment, a request/offer/order to either buy or sell a specified quantity or units of a financial instrument at a specified price or value. The message management module 116 may also identify and extract other order information and other actions associated with the extracted order. All extracted order characteristics, other information, and associated actions extracted from a message for an order may be collectively considered an order as described and referenced herein.

Order or message characteristics may include, for example, the state of the system after a message is received, arrival time (e.g., the time a message arrives at the Market Segment Gateway ("MSG") that is the point of ingress/entry and/or egress/departure for all transactions, i.e., the network traffic/packets containing the data therefore), message type (e.g., new, modify, cancel), and the number of matches generated by a message. Order or message characteristics may also include market participant side (e.g., buyer or seller) or time in force (e.g., a good until end of day order that is good for the full trading day, a good until canceled ordered that rests on the order book until matched, or a fill or kill order that is canceled if not filled immediately, or a fill and kill order (FOK) that is filled to the maximum amount possible based on the state of the order book at the time the FOK order is processed, and any remaining or unfilled/unsatisfied quantity is not stored on the books or allowed to rest).

An order processing module 118 may be included to decompose delta-based, spread instrument, bulk, and other types of composite orders for processing by the order book module 110 and/or the match engine module 106. The order processing module 118 may also be used to implement one or more procedures related to clearing an order. The order may be communicated from the message management module 116 to the order processing module 118. The order processing module 118 may be configured to interpret the communicated order, and manage the order characteristics, other information, and associated actions as they are processed through an order book module 110 and eventually transacted on an electronic market. For example, the order processing module 118 may store the order characteristics and other content and execute the associated actions. In an embodiment, the order processing module 118 may execute an associated action of placing the order into an order book for an electronic trading system managed by the order book module 110. In an embodiment, placing an order into an order book, i.e., storing data indicative thereof into the order book database/data structure and/or into an electronic trading system may be considered a primary action for an order. The order processing module 118 may be configured in various arrangements, and may be configured as part of the order book module 110, part of the message management module 116, or as an independent functioning module.

As an intermediary to electronic trading transactions, the exchange bears a certain amount of risk in each transaction that takes place. To that end, the clearing house implements risk management mechanisms to protect the exchange. One or more of the modules of the exchange computer system 100 may be configured to determine settlement prices for constituent contracts, such as deferred month contracts, of spread instruments, such as for example, settlement module 120. A settlement module 120 (or settlement processor or other payment processor) may be included to provide one or more functions related to settling or otherwise administering transactions cleared by the exchange. Settlement module 120 of the exchange computer system 100 may implement one or more settlement price determination techniques. Settlement-related functions need not be limited to actions or events occurring at the end of a contract term. For instance, in some embodiments, settlement-related functions may include or involve daily or other mark to market settlements for margining purposes. In some cases, the settlement module 120 may be configured to communicate with the trade database 108 (or the memory(ies) on which the trade database 108 is stored) and/or to determine a payment amount based on a spot price, the price of the futures contract or other financial instrument, or other price data, at various times. The determination may be made at one or more points in time during the term of the financial instrument in connection with a margining mechanism. For example, the settlement module 120 may be used to determine a mark to market amount on a daily basis during the term of the financial instrument. Such determinations may also be made on a settlement date for the financial instrument for the purposes of final settlement.

In some embodiments, the settlement module 120 may be integrated to any desired extent with one or more of the other modules or processors of the exchange computer system 100. For example, the settlement module 120 and the risk management module 114 may be integrated to any desired extent. In some cases, one or more margining procedures or other aspects of the margining mechanism(s) may be implemented by the settlement module 120.

One or more of the above-described modules of the exchange computer system 100 may be used to gather or obtain data to support the settlement price determination, as well as a subsequent margin requirement determination. For example, the order book module 110 and/or the market data module 112 may be used to receive, access, or otherwise obtain market data, such as bid-offer values of orders currently on the order books. The trade database 108 may be used to receive, access, or otherwise obtain trade data indicative of the prices and volumes of trades that were recently executed in a number of markets. In some cases, transaction data (and/or bid/ask data) may be gathered or obtained from open outcry pits and/or other sources and incorporated into the trade and market data from the electronic trading system(s). It should be appreciated that concurrent processing limits may be defined by or imposed separately or in combination on one or more of the trading system components.

The disclosed mechanisms may be implemented at any logical and/or physical point(s), or combinations thereof, at which the relevant information/data (e.g., message traffic and responses thereto) may be monitored or flows or is otherwise accessible or measurable, including one or more gateway devices, modems, the computers or terminals of one or more market participants, e.g., client computers, etc.

One skilled in the art will appreciate that one or more modules described herein may be implemented using, among other things, a tangible computer-readable medium comprising computer-executable instructions (e.g., executable software code). Alternatively, modules may be implemented as software code, firmware code, specifically configured hardware or processors, and/or a combination of the aforementioned. For example, the modules may be embodied as part of an exchange 100 for financial instruments. It should be appreciated the disclosed embodiments may be implemented as a different or separate module of the exchange computer system 100, or a separate computer system coupled with the exchange computer system 100 so as to have access to margin account record, pricing, and/or other data. As described herein, the disclosed embodiments may be implemented as a centrally accessible system or as a distributed system, e.g., where some of the disclosed functions are performed by the computer systems of the market participants.

The trading network environment shown in Fig. 1 includes exemplary computer devices 150, 152, 154, 156 and 158 which depict different exemplary methods or media by which a computer device may be coupled with the exchange computer system 100 or by which a user may communicate, e.g., send and receive, trade, clearing or other information therewith, such as by using messaging via the messaging module 116. It should be appreciated that the types of computer devices deployed by traders and the methods and media by which they communicate with the exchange computer system 100 is implementation dependent and may vary and that not all of the depicted computer devices and/or means/media of communication may be used and that other computer devices and/or means/media of communications, now available or later developed may be used. Each computer device, which may comprise a computer 200 described in more detail with respect to Fig. 2, may include a central processor, specifically configured or otherwise, that controls the overall operation of the computer and a system bus that connects the central processor to one or more conventional components, such as a network card or modem. Each computer device may also include a variety of interface units and drives for reading and writing data or files and communicating with other computer devices and with the exchange computer system 100. Depending on the type of computer device, a user can interact with the computer with a keyboard, pointing device, microphone, pen device or other input device now available or later developed.

An exemplary computer device 150 is shown directly connected to exchange computer system 100, such as via a T1 line, a common local area network (LAN) or other wired and/or wireless medium for connecting computer devices, such as the network 220 shown in Fig. 2 and described with respect thereto. The exemplary computer device 150 is further shown connected to a radio 168. The user of radio 168, which may include a cellular telephone, smart phone, or other wireless proprietary and/or non-proprietary device, may be a trader or exchange employee. The radio user may transmit orders or other information to the exemplary computer device 150 or a user thereof. The user of the exemplary computer device 150, or the exemplary computer device 150 alone and/or autonomously, may then transmit the trade or other information to the exchange computer system 100.

Exemplary computer devices 152 and 154 are coupled with a local area network ("LAN") 160 which may be configured in one or more of the well-known LAN topologies, e.g., star, daisy chain, etc., and may use a variety of different protocols, such as Ethernet, TCP/IP, etc. The exemplary computer devices 152 and 154 may communicate with each other and with other computers and other devices which are coupled with the LAN 160. Computers and other devices may be coupled with the LAN 160 via twisted pair wires, coaxial cable, fiber optics or other wired or wireless media. As shown in Fig. 1, an exemplary wireless personal digital assistant device ("PDA") 158, such as a mobile telephone, tablet based compute device, or other wireless device, may communicate with the LAN 160 and/or the Internet 162 via radio waves, such as via WiFi, Bluetooth and/or a cellular telephone based data communications protocol. PDA 158 may also communicate with exchange computer system 100 via a conventional wireless hub 164.

Fig. 1 also shows the LAN 160 coupled with a wide area network ("WAN") 162 which may be comprised of one or more public or private wired or wireless networks. In one embodiment, the WAN 162 includes the Internet 162. The LAN 160 may include a router to connect LAN 160 to the Internet 162. Exemplary computer device 156 is shown coupled directly to the Internet 162, such as via a modem, DSL line, satellite dish or any other device for connecting a computer device to the Internet 162 via a service provider therefore as is known. LAN 160 and/or WAN 162 may be the same as the network 220 shown in Fig. 2 and described with respect thereto.

Users of the exchange computer system 100 may include one or more market makers 166 which may maintain a market by providing constant bid and offer prices for a derivative or security to the exchange computer system 100, such as via one of the exemplary computer devices depicted. The exchange computer system 100 may also exchange information with other match or trade engines, such as trade engine 170. One skilled in the art will appreciate that numerous additional computers and systems may be coupled to exchange computer system 100. Such computers and systems may include clearing, regulatory and fee systems.

The operations of computer devices and systems shown in Fig. 1 may be controlled by computer-executable instructions stored on a non-transitory computer-readable medium. For example, the exemplary computer device 152 may store computer-executable instructions for receiving order information from a user, transmitting that order information to exchange computer system 100 in electronic messages, extracting the order information from the electronic messages, executing actions relating to the messages, and/or calculating values from characteristics of the extracted order to facilitate matching orders and executing trades. In another example, the exemplary computer device 154 may include computer-executable instructions for receiving market data from exchange computer system 100 and displaying that information to a user.

Numerous additional servers, computers, handheld devices, personal digital assistants, telephones, and other devices may also be connected to exchange computer system 100. Moreover, one skilled in the art will appreciate that the topology shown in Fig. 1 is merely an example and that the components shown in Fig. 1 may include other components not shown and be connected by numerous alternative topologies.

Referring now to Fig. 2, an illustrative embodiment of a general computer system or physical server 200 is shown. The computer system 200 can include a set of instructions that can be executed to cause the computer system 200 to perform any one or more of the methods or computer based functions disclosed herein. The computer system 200 may operate as a standalone device or may be connected, e.g., using a network, to other computer systems or peripheral devices. Any of the components discussed herein, such as processor 202, may be a computer system 200 or a component in the computer system 200. The computer system 200 may be specifically configured to implement a match engine, margin processing, payment or clearing function on behalf of an exchange, such as the Chicago Mercantile Exchange, of which the disclosed embodiments are a component thereof.

In a networked deployment, the computer system 200 may operate in the capacity of a server or as a client user computer in a client-server user network environment, or as a peer computer system in a peer-to-peer (or distributed) network environment. The computer system 200 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular embodiment, the computer system 200 can be implemented using electronic devices that provide voice, video, or data communication. Further, while a single computer system 200 is illustrated, the term "system" shall also be taken to include any collection of systems or sub-systems that individually or jointly execute a set, or multiple sets, of instructions to perform one or more computer functions.

As illustrated in Fig. 2, the computer system 200 may include a processor 202, e.g., a central processing unit (CPU), a graphics processing unit (GPU), or both. The processor 202 may be a component in a variety of systems. For example, the processor 202 may be part of a standard personal computer or a workstation. The processor 202 may be one or more general processors, digital signal processors, specifically configured processors, application specific integrated circuits, field programmable gate arrays, servers, networks, digital circuits, analog circuits, combinations thereof, or other now known or later developed devices for analyzing and processing data. The processor 202 may implement a software program, such as code generated manually (i.e., programmed).

The computer system 200 may include a memory 204 that can communicate via a bus 208. The memory 204 may be a main memory, a static memory, or a dynamic memory. The memory 204 may include, but is not limited to, computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one embodiment, the memory 204 includes a cache or random access memory for the processor 202. In alternative embodiments, the memory 204 is separate from the processor 202, such as a cache memory of a processor, the system memory, or other memory. The memory 204 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 204 is operable to store instructions executable by the processor 202. The functions, acts or tasks illustrated in the figures or described herein may be performed by the programmed processor 202 executing the instructions 212 stored in the memory 204. The functions, acts or tasks are independent of the particular type of instructions set, storage media, processor or processing strategy and may be performed by software, hardware, integrated circuits, firmware, micro-code, and the like, operating alone or in combination. Likewise, processing strategies may include multiprocessing, multitasking, parallel processing, and the like.

As shown, the computer system 200 may further include a display unit 214, such as a liquid crystal display (LCD), an organic light emitting diode (OLED), a flat panel display, a solid state display, a cathode ray tube (CRT), a projector, a printer or other now known or later developed display device for outputting determined information. The display 214 may act as an interface for the user to see the functioning of the processor 202, or specifically as an interface with the software stored in the memory 204 or in the drive unit 206.

Additionally, the computer system 200 may include an input device 216 configured to allow a user to interact with any of the components of system 200. The input device 216 may be a number pad, a keyboard, or a cursor control device, such as a mouse, or a joystick, touch screen display, remote control, or any other device operative to interact with the system 200.

In a particular embodiment, as depicted in Fig. 2, the computer system 200 may also include a disk or optical drive unit 206. The disk drive unit 206 may include a computer-readable medium 210 in which one or more sets of instructions 212, e.g., software, can be embedded. Further, the instructions 212 may embody one or more of the methods or logic as described herein. In a particular embodiment, the instructions 212 may reside completely, or at least partially, within the memory 204 and/or within the processor 202 during execution by the computer system 200. The memory 204 and the processor 202 also may include computer-readable media as discussed herein.

The present disclosure contemplates a computer-readable medium that includes instructions 212 or receives and executes instructions 212 responsive to a propagated signal, so that a device connected to a network 220 can communicate voice, video, audio, images, or any other data over the network 220. Further, the instructions 212 may be transmitted or received over the network 220 via a communication interface 218. The communication interface 218 may be a part of the processor 202 or may be a separate component. The communication interface 218 may be created in software or may be a physical connection in hardware. The communication interface 218 is configured to connect with a network 220, external media, the display 214, or any other components in system 200, or combinations thereof. The connection with the network 220 may be a physical connection, such as a wired Ethernet connection or may be established wirelessly. Likewise, the additional connections with other components of the system 200 may be physical connections or may be established wirelessly.

The network 220 may include wired networks, wireless networks, or combinations thereof. The wireless network may be a cellular telephone network, an 802.11, 802.16, 802.20, or WiMax network. Further, the network 220 may be a public network, such as the Internet, a private network, such as an intranet, or combinations thereof, and may utilize a variety of networking protocols now available or later developed including, but not limited to, TCP/IP based networking protocols.

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer program products, i.e., one or more modules of computer program instructions encoded on a computer readable medium for execution by, or to control the operation of, data processing apparatus. While the computer-readable medium is shown to be a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding, or carrying a set of instructions for execution by a processor or that causes a computer system to perform any one or more of the methods or operations disclosed herein. The computer readable medium can be a machine-readable storage device, a machine-readable storage substrate, a memory device, or a combination of one or more of them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

In a particular non-limiting, exemplary embodiment, the computer-readable medium can include a solid-state memory such as a memory card or other package that houses one or more non-volatile read-only memories. Further, the computer-readable medium can be a random-access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative embodiment, dedicated or otherwise specifically configured hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

In accordance with various embodiments of the present disclosure, the methods described herein may be implemented by software programs executable by a computer system. Further, in an exemplary, non-limited embodiment, implementations can include shared or proprietary distributed processing, e.g., a cloud/shared host-based implementation, component/object distributed processing, and parallel processing. Alternatively, virtual computer system processing, e.g., using proprietary and/or cloud/shared host-based implementations, can be constructed to implement one or more of the methods or functionality as described herein.

Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and anyone or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non-volatile memory, media, and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

As used herein, the terms "microprocessor" or "general-purpose processor" ("GPP") may refer to a hardware device that fetches instructions and data from a memory or storage device and executes those instructions (for example, an Intel Xeon processor or an AMD Opteron processor) to then, for example, process the data in accordance therewith. The term "reconfigurable logic" may refer to any logic technology whose form and function can be significantly altered (i.e., reconfigured) in the field post-manufacture as opposed to a microprocessor, whose function can change post-manufacture, e.g. via computer executable software code, but whose form, e.g. the arrangement/layout and interconnection of logical structures, is fixed at manufacture. The term "software" may refer to data processing functionality that is deployed on a GPP. The term "firmware" may refer to data processing functionality that is deployed on reconfigurable logic. One example of a reconfigurable logic is a field programmable gate array ("FPGA") which is a reconfigurable integrated circuit. An FPGA may contain programmable logic components called "logic blocks," and a hierarchy of reconfigurable interconnects that allow the blocks to be "wired together," somewhat like many (changeable) logic gates that can be inter-wired in (many) different configurations. Logic blocks may be configured to perform complex combinatorial functions, or merely simple logic gates like AND, OR, NOT and XOR. An FPGA may further include memory elements, which may be simple flip-flops or more complete blocks of memory.

To provide for interaction with a user, embodiments of the subject matter described in this specification can be implemented on a device having a display, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well. Feedback provided to the user can be any form of sensory feedback, e.g., visual feedback, auditory feedback, or tactile feedback. Input from the user can be received in any form, including acoustic, speech, or tactile input.

Embodiments of the subject matter described in this specification can be implemented in a computing system that includes a back end/hardware component, e.g., a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship with each other.

### RESILIENCY MODULE / REDUNDANT ARRAY OF PROCESSING PIPELINES WITH A SEQUENCER AND SINGLE ARBITER

Fig. 3 depicts a more detailed block diagram of a resiliency system/architecture 300 which may be used to implement resiliency as described herein for any of the one or more functions. modules, any one or more subsets of the functions/modules or all of the functions/modules shown in Figure 1 described in more detail above. The choice of which functions/modules or subsets thereof are implemented according to the disclosed embodiments is implementation dependent.

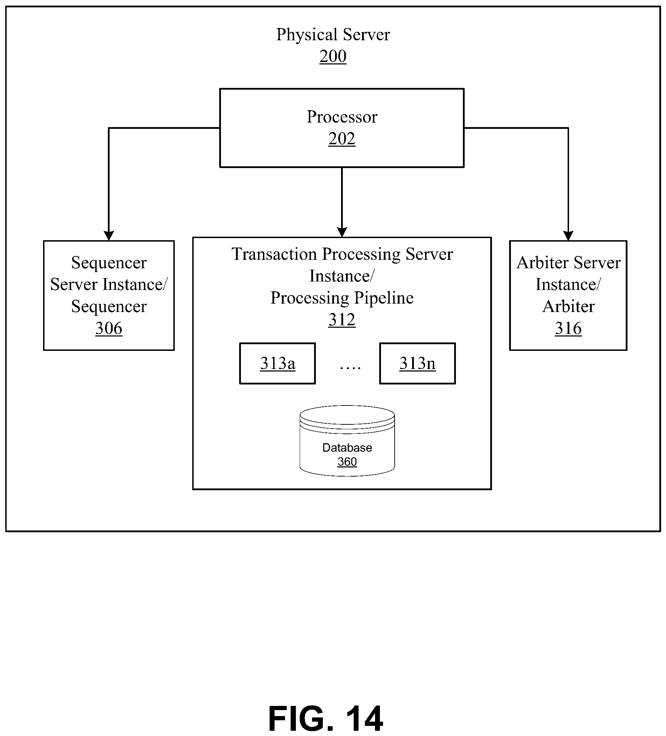

The system/architecture 300 may include a hardware layer which implements a virtualization layer, and an application and service layer. The hardware layer may include storage, network devices, computing systems, host machines, and other hardware such as one or more physical servers 200 including one or more processors 202 as shown in FIGS. 2 and 14. The virtualization layer may include virtual representations of physical computing and storage resources such as one or more virtual server machines or processors. The application and service layer may coordinate and support requests from different interfaces and may offer different services, instances, and applications. The virtualization layer enables multiple applications, services, processes, or instances including virtual server machines and processors to use/share the same hardware resources.

The system/architecture 300 may include a sequencer server instance 304, an arbiter server instance 316, and transaction processing server instances (TPSI's) 312 that, for example, may be implemented by the hardware layer, e.g., the one or more computer systems/physical servers 200 including the one or more processors 202 as shown in FIG. 14. In some embodiments, each physical server 200 may implement one or more TPSI's 312. As also shown in FIG. 14, each TPSI 312 may include one or more components 313 and one or more databases 360 for storing processed transactions and other data. As discussed above, the physical server 200 may provide a shared infrastructure that may also implement instances of other processing systems for other tenants. Further, on any given physical server 200, the TPSI's 312 may be grouped into logical groups, arrays, or subsets. The system/architecture 300 may include multiples of such groups, arrays, or subsets.

For example, each TPSI 312 may implement the match engine module 106 described above and include components 313, a series or pipeline thereof, which process incoming sequenced transactions against an order book database/data structure in order to attempt to match the incoming transaction with a previously received by not yet fully satisfied transaction counter thereto and stored in the order book database/data structure, the result of the processing including, for example, at least data indicative of whether a match was identified and the extent to which the incoming transaction and any identified previously received counter transactions were satisfied.

In particular, the sequencer server instance 304 is configured to receive, via a first data path 350, an incoming request message from a source 302, e.g., a client computer, an arbiter server instance 316 of another TPSI 312, and the like. Incoming request messages, for example, may include data indicative of a request to electronically transact, e.g., buy or sell, a quantity of a financial instrument, such as a particular futures or options contract, at a particular price.

As explained in more detail below, the sequencer server instance 304 is configured to sequence the received incoming request message by augmenting the received incoming request message with a unique identifier. The unique identifier characterizes an order of receipt of the received incoming request message relative to other prior or subsequently received incoming request messages, e.g., to ensure deterministic processing thereof. The sequencer server instance 304 is configured to forward a copy of the sequenced incoming request message to each of the plurality of TPSI's 312 via a second data path 352.

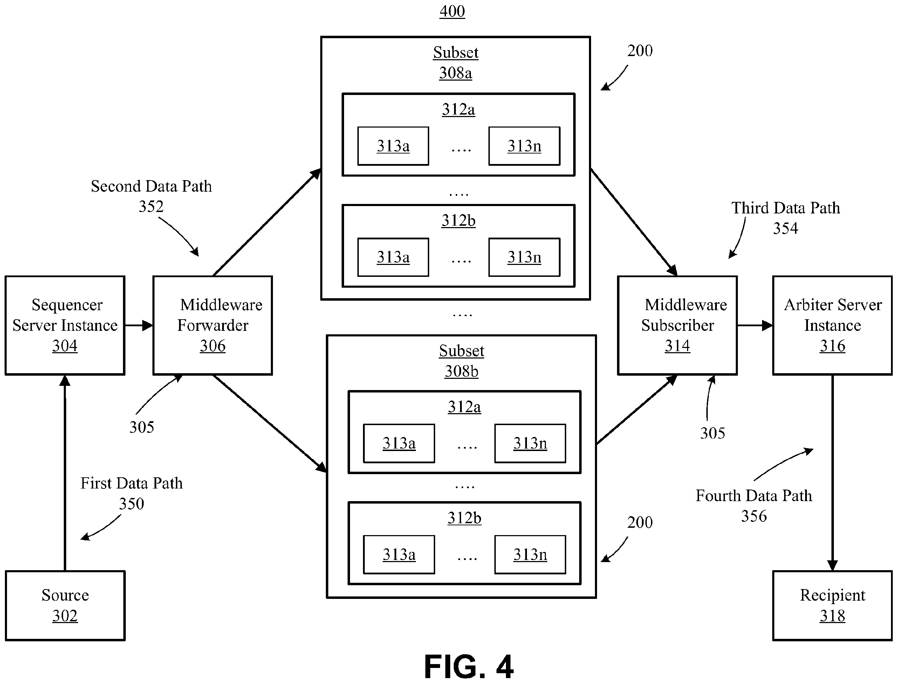

In some embodiments, as shown in Figs. 4 and 5, the transaction processing system 400/500 may include a messaging middleware 305 which provides an asynchronous and scalable messaging service to connect the sequencer server instance 304, the TPSI's 312, and the arbiter server instance 316 to the communications network 220. The messaging middleware 305 may include a middleware publisher 306, e.g., a middleware publishing forwarder, and a middleware subscriber 314.

In some embodiments, the second data path may comprise at least one asynchronous middleware publisher 306 coupled between the sequencer server instance and each of the plurality of TPSI's 312. In some embodiments, the at least one middleware publisher 306 may be configured to store the copy of the incoming request message during a time window that does not exceed a time threshold.

As mentioned above, each of the plurality of TPSI's 312 may implement a plurality of processing components 313 which are coupled with each other. In some embodiments, the plurality of processing components 313 are coupled with each other "in series", i.e., a processing pipeline, which enables multiple transactions to be processed by the components in a parallel fashion.

In some embodiments, each of the plurality of processing components 313 is characterized by a current state and configured to perform, in series, one or more of receiving an electronic message, processing the received electronic message and generating an electronic result message indicative of a result of an operation which may alter the current state thereof.

In some embodiments, each of the plurality of TPSI's 312 process in parallel, i.e., upon receipt thereby, each electronic message of a plurality of different electronic messages.

In some embodiments, each of the plurality of TPSI's 312 may implement the match engine module 106, as described above, and process the copy of the incoming sequenced request message by identifying a previously received sequenced request message for a transaction counter thereto in an attempt to satisfy one or both of the copy of the incoming sequenced request message and the previously received sequenced request message.

Each of the plurality of TPSI's 312 is configured to receive a copy of the incoming sequenced request message for a transaction from the sequencer server instance 304, process the copy of the incoming sequenced request message using the plurality of processing components 313, generate a sequenced result message indicative thereof, and transmit the sequenced result message to an arbiter server instance 316 via a third data path 354. Each of the sequenced result messages includes the unique identifier.

In some embodiments, as shown in Fig. 3, the transaction processing system 300 may include two or more subsets, e.g., a first subset 308a and a second subset 308b. The first subset 308a may include at least two TPSI's 312, e.g., 312a and 312b. The second subset 308b may include at least two TPSI's 312, e.g., 312c and 312d. Each of the TPSI's 312 may include processing components 313a-313n.

In some embodiments, as shown in Fig. 5, the first subset 308a of the TPSI's 312a and 312b may be located in a first region, e.g., "us-west-1", and the second subset 308b of the plurality of transaction processing server instances 312c and 312d may be located in a second region, e.g., "us-east-1", located different from the first region. In particular, the first subset 308a may be located geographically remote from the second subset 308b. In some embodiments, the first subset 308a and the second subset 308b may be located in different cities, different countries, different time zones, or different continents. For example, the first subset 308a may be located in a first city, e.g., Columbus, Ohio and the second subset 308b may be located in a second city, e.g., Madrid, Spain.

In some embodiments, each of the plurality of TPSI's 312 may be located in a different logical zone. For example, TPSI's 312a and 312b may be located in different zones "us-west1-a" and "us-west1-b" respectively.

In some embodiments, at least one of the two or more subsets 308a, 308b includes only one TPSI 312.

In some embodiments, the sequencer server instance 304 may be located in a same region as one of the two or more subsets 308a, 308b.

The arbiter server instance 316 is configured to receive, from two or more subsets of the plurality of TPSI's 312, one or more of the sequenced result messages that have the same unique identifier. In some embodiments, the arbiter server instance 316 may be configured to determine that a sequenced result message with the same unique identifier has not been previously transmitted to the recipient 318.

The arbiter server instance 316 may be configured to select a sequenced result message from among the one or more of the received sequenced result messages based on a selection algorithm which determines the earliest received identical sequenced result messages received from a majority of the TPSI's 312 of a single subset of the plurality of TPSI's 312. In some embodiments, the selection algorithm may be based on a consensus process including location, error detection, error correction, quorum, or a number of transaction processing server instances.

In some embodiments, the arbiter server instance 316 may be configured to select the selected sequenced result message if the selected sequenced result message is received earliest.

In some embodiments, the arbiter server instance 316 may be configured to select the sequenced result message based on the sequenced result messages from the one or more of the sequenced result messages received in accordance with a predetermined threshold value. The predetermined threshold may include a time value or a number of received sequenced result messages value.

In some embodiments, each of the one or more of the sequenced result messages may include an output of the processing and data indicative of the region. The arbiter server instance 316 may be configured to select the sequenced result message from the one or more of the sequenced result messages if a majority of the plurality of the TPSI's 312 within the same region independently arrive at the same output of the selected sequenced result message.

In some embodiments, the arbiter server instance 316 may be located in a same region as one of the two or more subsets 308a, 308b.

The arbiter server instance 316 may be configured to transmit the selected sequenced result message to a recipient 318 over a fourth data path 356.

As further explained below, in some embodiments, as shown in Figs. 4 and 5, the third data path may comprise at least one middleware subscriber 314 coupled between each of the plurality of TPSI's 312 and the arbiter server instance 316.

In some embodiments, the sequence server instance 304, each of the plurality of TPSI's 312, and the arbiter server instance 316 may be implemented as virtual machine servers.

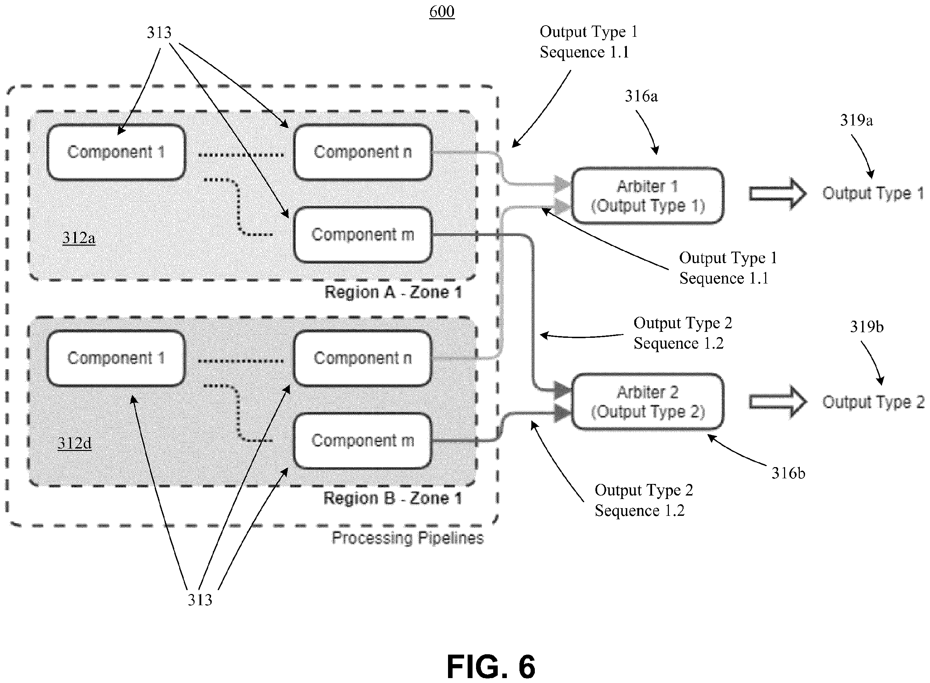

As further described below, in some embodiments, as shown in Fig. 6, the arbiter server instance 316 is one of a plurality of arbiter server instances 316a, 316b. Each of the arbiter server instances 316a, 316b may be located at one of a plurality of different locations.

In some embodiments, as shown in Fig. 6, a transaction processing system 600 may include an arbiter selector instance configured to select a result message from a plurality of result messages received from any of the plurality of arbiter server instances arbiter server instances 316a, 316b based on the selection algorithm or on a current time of day or location.

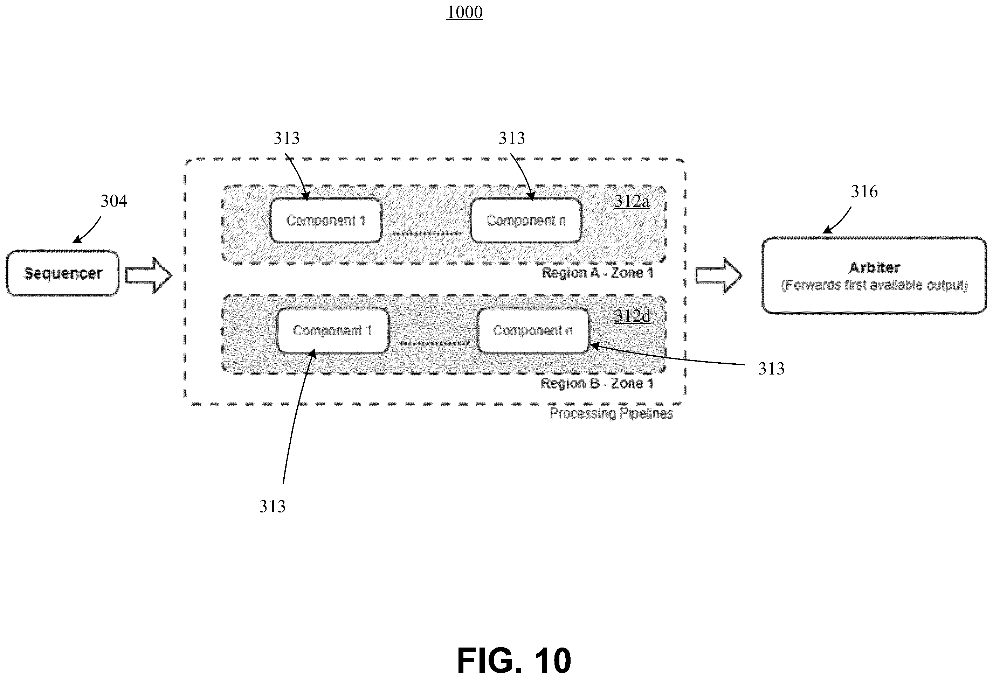

In some embodiments, as shown in Fig. 10, the plurality of TPSI's 312 may include a first version v1 of a transaction processing server instance prior to a modification and a second version v2 of the transaction processing server instance as modified by the modification. The first version v1 of the TPSI 312 may generate a first version v1 of the sequenced result message and the second version v2 of the TPSI 312 may generate a second version v2 of the sequenced result message.

In some embodiments, the plurality of arbiter server instances 316 may include a first version v1 of the arbiter server instance 316 prior to the modification and a second version v2 of the arbiter server instance 316 as modified by the modification.

In some embodiments, the system may comprise an arbiter selector server instance configured to: perform validation by determination of whether an output of the second version of the sequenced result message is valid or invalid; and prevent the second version of the arbiter server from transmitting the second version of the sequenced result message to the recipient until validation is performed.

In some embodiments, upon the arbiter selector server instance determining that the output of the second version v2 of the arbiter server instance is valid, the arbiter selector server instance is configured to cause the first version v1 of the transaction processing server instance and the first version v1 of the arbiter server instance to be discarded from the system and to cause the second version of the arbiter server instance to transmit the second version v2 of the sequenced result message to the recipient 318.

In some embodiments, upon the arbiter selector server instance determining that the output of the second version v2 of the arbiter server instance 316 is invalid, the arbiter selector server instance 316 may be configured to cause the second version v2 of the TPSI 312 and the second version of the arbiter server instance 316 to be discarded from the system.

FIG. 5 depicts a block diagram of a system 500 for providing resiliency in a cloud environment according to some embodiments.

According to some embodiments, the transaction processing system 500 may implement a sequencer 304, processing pipelines 312, and an arbiter 316. The system 500 may further implement a regional middleware publisher 306 and a regional middleware subscriber 314.

In particular, the sequencer 304 may be implemented by the sequencer server instance 304 as described above. The sequencer 304 accepts or initiates inputs 303 to be processed. The inputs 303 may include input streams, incoming request messages, instructions, operations, tasks, transactions, and the like from multiple sources 302 such as client computers, timing control devices, instruction generators, other arbiters, etc. As noted above, the sequencer 304 sequences the inputs 303 by augmenting the inputs 303 with a unique identifier so that outputs 317 may be compared based on the unique identifier. The unique identifier may include time signal data, or data indicative of a time of receipt or time or sequence indicative of a temporal or sequential relationship between a received input 303 and other received inputs. The time signal data may be based on, for example, a system clock or the sequencer 304. The sequencer 304 may additionally serialize, or otherwise sequence, the inputs 303 based on their order of receipt by the sequencer 304. Upon sequencing the input 303, the sequencer 304 forwards the input 303 to all processing pipelines 312.

The processing pipelines 312 may be implemented by TPSI's 312 as described above. The processing pipelines 312 may include a chain of components 313 organized in a pipe and filter architecture to process inputs 303 and deliver one or more outputs 317.

The processing pipelines 312 are deterministic functionally. In some embodiments, if an input 303 splits into multiple outputs through a processing pipeline 312 then a sub-sequence may be used for tracking the fan out. Since the processing pipelines are deterministic, every processing pipeline 312 should deliver the exact same output on the same sequence number and sub-sequence number. Further, each of the processing pipelines 312 is configured to be deterministic in producing outputs at some stream processing boundaries which may be as tight as individual transactions or loose enough to incorporate a batch of correlated transactions. The arbiter 316 may compare these transactions at these boundaries to decide on which output 319 to forward to the recipient 318, e.g., a recipient device, a consumer, a computer device, another sequencer 304 of another pipeline 312, and the like. Multiple pipelines 312 may be performing the same processing in parallel in different zones and even regions based on predetermined resiliency goals. The arbiter 316 may be implemented by an arbiter server instance 316. The arbiter 316 may receive outputs 317 from multiple processing pipelines 312 at different times. The outputs may be sourced from processing pipelines 312 that may be located in different zones and regions.

The arbiter 316 compares the outputs 317 by sequence and sub-sequence number to pick the correct output to forward to the recipient 318. The arbiter 316 does not need to wait for all outputs from all processing pipelines 312.

The arbiter 316 may be configured to define what is the correct output and whether the processing pipelines 312 should provide performance guarantee and/or resiliency. The arbiter 316 may be located in same region as at least one processing pipeline 312. The arbiter 316 may select the correct output to forward based on a selection/voting algorithm that may include: (1) first/earliest output received to achieve performance guarantee, (2) majority in agreement to achieve resiliency, fault tolerance, or to ignore a faulty update, (3) combination of outputs to achieve performance and fault tolerance, and (4) earliest of two outputs matching to achieve functional correctness.

In some embodiments, the arbiter 316 may forward the output 319 when a condition is met based on the selection algorithm. In some embodiments the arbiter 316 may select at least a pair of outputs 317 to compare for correctness. In particular, the arbiter 316 may wait for the earliest two outputs for the same sequence number that matches to ensure functional correctness. Alternatively, a simple arbiter selection algorithm may forward the first output as soon as the next desired sequence number is received.

### ENSURING CONSISTENCY AND RESILIENCY

In some embodiments, some of the processing pipelines 312 may be located in different zones and/or different geographic regions to achieve regional and/or multi-regional resiliency based on predetermined resiliency and performance goals. In particular, deploying processing pipelines 312 in disparate geographic regions may minimize the likelihood of a same failure or maintenance event compromising the availability of the processing pipelines 312.

For example, as shown, in Fig. 5, processing pipelines 312a, 312b, and 312c may be located in geographical region A. Further, processing pipelines 312a, 312b, and 312c may be located in different zones within Region A: Region A - Zone 1, Region A - Zone 2, and Region A - Zone 3 respectively. Processing pipelines 312d and 312e may be located in geographical region B. Further, processing pipelines 312d and 312e may be located in different zones within Region B: Region B - Zone 1 and Region B - Zone 2 respectively.

Multiple processing pipelines 312 may be doing the same processing in parallel as shown in Fig. 5 in different zones and regions based on predetermined resiliency goals.

If a processing pipeline 312 runs slower due to the various external forces mentioned above or fails due to a hardware/service/zone/region failure its output will not make it in time to the arbiter 316 for a decision competition. This is the key capability of this model that enables a seamless delivery of performance consistency and resiliency at the same time. The fastest pipelines 312 will deliver the outcome first and so any abrupt hindrances to the processing will be overcome by the architecture thus delivering consistent performance. Processing pipelines 312 in secondary regions will always fall behind for the final decision but when the faster zone or region fails the slower ones will be available to still deliver an output, this delivers resilience.

In some embodiments, the sequencer 304 may forward the input 303 and the arbiter 316 may forward the outputs 317 via a publish-subscribe mechanism for processing. The publish-subscribe mechanism may include a regional middleware that is resilient across multiple regions and ensures that at least one of the processing pipelines 312 between the sequencer 304 and the arbiter 316 runs in a different region. As shown in Fig. 5, the regional middleware may include a regional middleware publisher 306 coupled between the sequencer 304 and each of the processing pipelines 312, and a regional middleware subscriber 314 coupled between each of the processing pipelines 312 and the arbiter 316.

Resiliency may be ensured by the cloud platform. Once a message is received by a regional middleware publisher 306 on a topic in a region, that message will not be lost in accordance with a threshold value that may be configurable, e.g., 7 days, from that region even if it goes down. Sending it to dual regions A and B ensures that the message may be observed by subscribers as long as one of the publisher regions and one of the subscriber regions is still active.

The regional middleware publisher 306 provides resiliency to the sequencer 304. In particular, the transaction processing system 500 may be implemented as a single instance of the sequencer 304 over multi-region middleware publishers 306 and may only acknowledge an input 303 when the middleware publisher 306 has received the message. Even though the region of one of the middleware publishers 306 may fail, since at least one of the publishers 306 may be located in an un-failed region, the published messages may be passed through a corresponding processing pipeline 312.

The regional middleware subscriber 314 provides resiliency to the arbiter 316. The arbiter 316 may be implemented as a single instance over multi-region subscriptions. If the region where the arbiter 316 is located fails, as long as one of the subscriptions is in an un-failed region it can come right back up and resume where it left.

The disclosed embodiments may achieve failure recovery. In other recovery models, the processing of the components needs to be idempotent to ensure that the processing of the same sequence number does not result in a state change. In contrast, the disclosed architecture model does not provide the same recovery mechanism. Instead, the output of a working pipeline 312 is selected among the plurality of processing pipelines 312. However, if all pipelines 312 are down, then the system/architecture 500 may use the unique identifier to restart processing incoming transactions from the last sequence delivered by the arbiter 316. Therefore, the unique identifier or sequence number may be tracked. Also, the state of any transactions stored up to the last arbiter 316 may be rolled back if there is a failure up to that last published sequence number by the arbiter 316. All processing pipelines 312 may need to be restarted from that sequence which may have been partially processed.

To reduce the occurrence of rollbacks, more processing pipelines 312 may be added to more regions. If the region that failed is the region where the arbiter 316 was located, then it is possible that the latest sequence number processed by the arbiter 316 was in the same region, as it will be the fastest region due to proximity. In this case, the arbiter 316 has to wait for the failed region to come back to discover the correct next sequence number to process. To avoid this scenario, the arbiter 316 may be located in a region where none of the processing pipelines 312 are located.

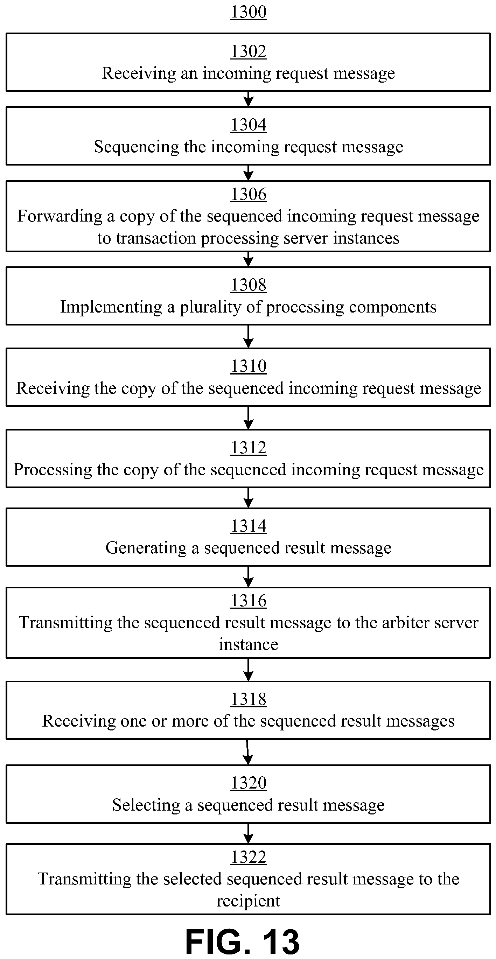

FIG. 13 depicts an example flow chart 1300 of the operation of the system of the systems 300-400 shown in Figures 3 and 4. In one embodiment, the operation of the systems 300-400 includes: receiving, by a sequencer server instance, via a first data path, an incoming request message from a source (Block 1302); sequencing, by the sequencer server instance, the received incoming request message, by augmenting the received incoming request message with a unique identifier which characterizes an order of receipt of the received incoming request message relative to other prior or subsequently received incoming request messages (Block 1304); forwarding, by the sequencer server instance, a copy of the sequenced incoming request message to each of a plurality of transaction processing server instances via a second data path (Block 1306); implementing, by the plurality of transaction processing server instances, a plurality of processing components coupled with each other (Block 1308); receiving, by the plurality of transaction processing server instances, a copy of the incoming sequenced request message for a transaction from the sequencer server instance (Block 1310); processing, by the plurality of transaction processing server instances, the copy of the incoming sequenced request message using the plurality of processing components (Block 1312); generating, by the plurality of transaction processing server instances, a sequenced result message indicative thereof (Block 1314); transmitting, by the plurality of transaction processing servers, the sequenced result message to an arbiter server instance via a third data path, wherein the sequenced result messages includes the unique identifier (Block 1316); receiving, by the arbiter server instance from two or more subsets of the plurality of transaction processing server instances, one or more of the sequenced result messages having the same unique identifier (Block 1318); selecting, by the arbiter server instance, a sequenced result message from among the one or more of the received sequenced result messages based on a selection algorithm which determines the earliest received identical sequenced result messages received from a majority of the transaction processing server instances of a single subset of the plurality of transaction processing server instances (Block 1320); and transmitting, by the arbiter server instance, the selected sequenced result message to a recipient over a fourth data path (Block 1322).

In one embodiment, a first subset of the plurality of transaction processing server instances is located in a first region and a second subset of the plurality of transaction processing server instances is located in a second region different from the first region.

In one embodiment, each of the plurality of transaction processing server instances are located in a different logical zone.

In one embodiment, a first subset includes at least two transaction processing server instances and a second subset includes at least two transaction processing server instances.

In one embodiment, the operation of the systems/architecture 300 and 400 further includes determining, by the arbiter server instance, that a sequenced result message with the same unique identifier has not been previously transmitted to the recipient.

In one embodiment, at least one of the two or more subsets includes only one transaction processing server instance.

In one embodiment, the sequencer server instance is located in a same region as one of the two or more subsets.

In one embodiment, the arbiter server instance is located in a same region as one of the two or more subsets.

In one embodiment, the second data path comprises at least one asynchronous middleware publisher coupled between the sequencer server instance and each of the plurality of transaction processing server instances.

In one embodiment, the operation of the system 400 further includes storing, by the at least one middleware publisher, the copy of the incoming request message during a time window that does not exceed a time threshold.

In one embodiment, the third data path comprises at least one middleware subscriber coupled between each of the plurality of transaction processing server instances and the arbiter server instance.

In one embodiment, the operation of the systems 300 and 400 further includes selecting, by the arbiter server instance, the selected sequenced result message if the selected sequenced result message is received earliest.

In one embodiment, the operation of the systems 300 and 400 further includes selecting, by the arbiter server instance, the sequenced result message based on the sequenced result messages from the one or more of the sequenced result messages received in accordance with a predetermined threshold value.

In one embodiment, the predetermined threshold includes a time value or a number of received sequenced result messages value.

In one embodiment, the operation of the systems 300 and 400 further includes determining, by the arbiter server instance, that a majority of the plurality of the transaction processing server instances within the same region independently arrive at a same output of the selected sequenced result message; and selecting, by the arbiter server instance, the sequenced result message from the one or more of the sequenced result messages, each of the one or more of the sequenced result messages including the output of the processing and data indicative of a region.

In one embodiment, the selection algorithm is based on a consensus process including location, error detection, error correction, quorum, or a number of transaction processing server instances.

In one embodiment, the sequence server instance, each of the plurality of transaction processing server instances, and the arbiter server instance are implemented as virtual machine servers.

In one embodiment, the arbiter server instance is one of a plurality of arbiter server instances each located at one of a plurality of different locations.

In one embodiment, the operation of the system 600 includes selecting, by an arbiter selector instance, a result message from a plurality of result messages received from any of the plurality of arbiter server instances based on the selection algorithm, on a current time of day, or on a location.

In one embodiment, the operation of the system 1100 includes generating, by a first version of a transaction processing server instance of the plurality of transaction processing servers instances prior to a modification, a first version of the sequenced result message; generating, by a second version of a transaction processing server instance of the plurality of transaction processing server instances as modified by the modification, a second version of the sequenced result message; performing, by an arbiter selector server instance, a validation by determining whether an output of the second version of the sequenced result message is valid or invalid; and preventing, by the arbiter selector server instance, a second version of the arbiter server as modified by the modification, from transmitting the second version of the sequenced result message to the recipient until validation is performed.

In one embodiment, the operation of the system 1100 includes determining, by the arbiter selector server instance that the output of the second version of the arbiter server instance is valid; causing, by the arbiter selector server instance, the first version of the transaction processing server instance and a first version of the arbiter server instance prior to the modification to be discarded; and causing, by the arbiter selector server instance, the second version of the arbiter server instance to transmit the second version of the sequenced result message to the recipient.

In one embodiment, the operation of the system 110 includes determining, by the arbiter selector server instance, that the output of the second version of the arbiter server instance is invalid; and causing, by the arbiter selector server instance, the second version of the transaction processing server instance and the second version of the arbiter server instance to be discarded.

In one embodiment, the operation of the systems 300 and 400 includes performing, by each of the plurality of components characterized by a current state, in series, one or more of receiving an electronic message, processing the received electronic message and generating an electronic result message indicative of a result of an operation which may alter the current state thereof.

In one embodiment, the operation of the systems 300 and 400 includes processing, by each of the plurality of transaction processing server instances in parallel, each different electronic message of a plurality of electronic messages.

In one embodiment, the operation of the systems 300 and 400 includes processing, by the transaction processing server instances, the copy of the incoming sequenced request message by identifying a previously received sequenced request message for a transaction counter thereto in an attempt to satisfy one or both of the copy of the incoming sequenced request message and the previously received sequenced request message.

### MULTIPLE ARBITERS

FIG. 6 depicts a block diagram of a system 600 for providing resiliency in a cloud environment according to some embodiments.

In some embodiments, a pipeline 312 may generate multiple outputs instead of a single output. As a result, the pipeline 312 may be configured to augment the sequence of the message within the pipeline 312 by using a subsequence. In one embodiment, the pipeline 312 may include a pipeline sequencer component (not shown) that augments the message with the subsequence.

For example, as shown in Fig. 6, when the processing pipelines 312a and 312d fork out into multiple outbound components 313, e.g., components n and m, a copy of an incoming message may be received by each processing pipeline 312a and 312d, processed, and divided into two output messages having different output types. As a result, the system 600 may include multiple arbiters 316a and 316b that may be configured to receive and process different types of outputs 319a and 319b, e.g., output type 1 and output type 2. In this case, the sequence may be repeated across the fork legs but their outputs may be differentiated via content in their output that the arbiters 316a and 316b may use to filter and forward accordingly. In particular, as opposed to an arbiter 316 comparing sequence one against two, the arbiter 316a may be configured to compare an output type 1 having a sequence and subsequence 1.1 coming from the processing pipeline 312a against a second output type 1 having the same sequence and subsequence 1.1 coming from the other processing pipeline 312b, and the arbiter 316b may configured to compare an output type 2 having a sequence and subsequence 1.2 coming from the processing pipeline 312a against another output type 2 having the same sequence and subsequence 1.2 coming from the other processing pipeline 312b.

### EXPOSING INTERIM STATE OF A PIPELINE

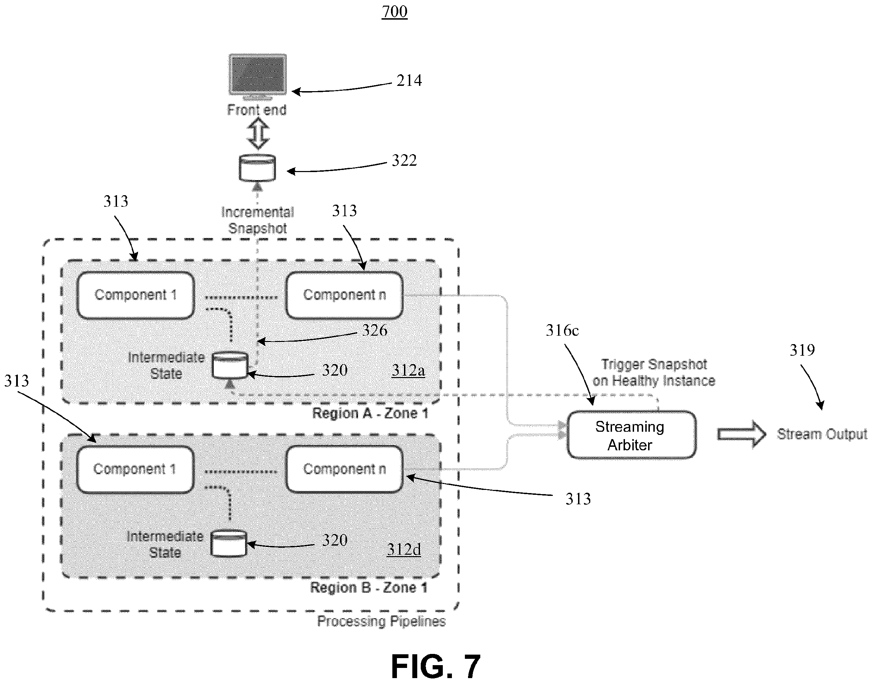

FIG. 7 depicts a block diagram of a system 700 for providing resiliency in a cloud environment according to some embodiments.

In some embodiments, a requestor such as a consumer, audit, or reporting system may need access to various supplementary data, e.g. an intermediate calculation result, performance data, and the like, that is produced within a processing pipeline 312. However, the supplementary data may not be included in the final result message provided by the redundant processing pipelines 312 to the arbiter 316.

The system 700 shown in Figure 7, may grant access to the supplementary data via an incremental push or periodic snapshot 322. As shown in Fig. 7, a streaming arbiter 316c may select a processing pipeline 312b to produce an interim or intermediate state 320 which includes the supplementary data that is not released or published as an output to the streaming arbiter 316c. The streaming arbiter 316c selects the processing pipeline 312b to produce the intermediate state 320 only if the streaming arbiter 316 determines that the processing pipeline 312b is in a healthy state and is producing correct results based on a selection algorithm. Alternatively, the streaming arbiter 316c may query the state across the processing pipelines 312 and may provide the best version based on a selection algorithm via an application programming interface (API).

In particular, as shown in Figure 7, the system 300 may trigger an incremental replication of the database out of the selected processing pipeline 312b into a single instance or incremental snapshot 322 periodically via an intermediate path 326. The incremental snapshot 322 may then be displayed on a user interface (UI) such as a dashboard or other report interface via a front end 214.

In some embodiments, when the processing pipeline 312b fails, a full replication of the processing pipelines 312 may be used to restore the failed pipeline 312b in a different region. In some embodiments, a dual database to single database replication may work for incremental replication. In other embodiments, a persistence arbiter (not shown) may be configured to perform replication by monitoring sequence numbers and the flow of the intermediate path 326.

Alternatively, the interim state 320 can instead be queried via the streaming arbiter 316c which may return the output with the best version based on the selection algorithm. Each component 313 of the pipelines 312 may need to abstract away from their database via an API abstraction layer so the streaming arbiter 316c has visibility into the sequences being queried and may manage the incremental returns or exclude state transitions that have not been confirmed by the streaming arbiter 316c if there is a need.

### OTHER ARBITER TYPES: REQUEST/RESPONSE AND TCP ENDPOINT ARBITERS

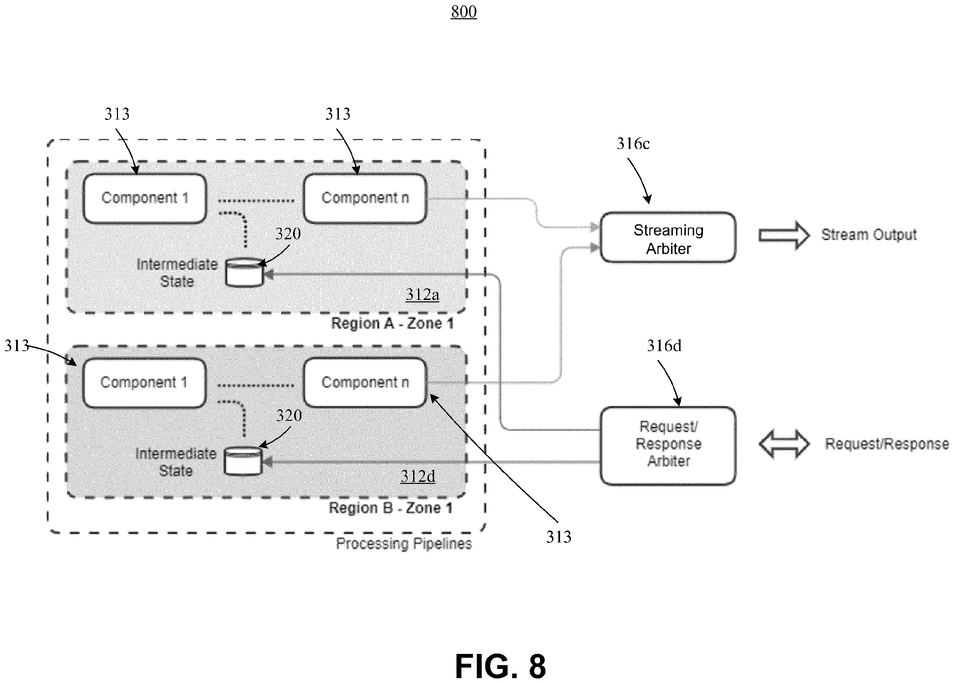

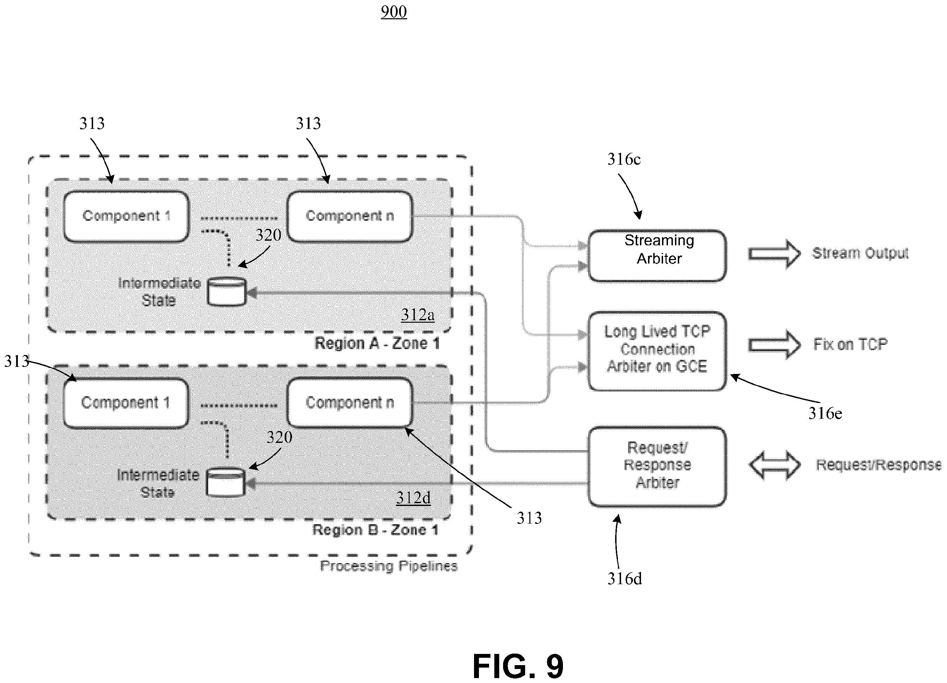

FIG. 8 depicts a block diagram of a system 800 for providing resiliency in a cloud environment according to some embodiments. Fig. 9 depicts a block diagram of a system 900 for providing resiliency in a cloud environment according to some embodiments.

The systems 800 and 900 as shown in Figures 8 and 9, may grant access to the supplementary data by responding to a request to query the intermediate state 320. As shown in Figures 8 and 9, the systems 800 and 900 may include a "request/response" arbiter 316d which receives and sends the request to both processing pipelines 312a and 312d. The "request/response" arbiter 316d then confirms receiving the same response from both processing pipelines 312a and 312d before forwarding that response back to the requestor. The goal is to only access the processing pipelines 312 via the sequencer 304 or the arbiter 316 so that the internal state of the system is encapsulated, internally managed, and accessed in a consistent manner. The request/response arbiter 316d may query all the processing pipelines 312 as the most accurate state of the processing pipeline 312 or the data may be unknown unless the data is evaluated and then it may use custom logic to decide which state to forward.

In other embodiments, as shown in FIG. 9, different arbiter types may also be used to manage different transport protocols. As shown in FIG. 9, the system 900 may also include a TCP arbiter 316e that may be instantiated on a sole virtual server machine 200 to manage long lived TCP connections and service the data over TCP. The TCP arbiter 316e may keep the middleware messages as un-acknowledged until the data has been acknowledged over TCP to ensure that, if the machine server 200 fails, the machine server 200 may recover the TCP connection state from the middleware publisher or subscriber.

### DEPLOYMENT STRATEGIES AND ARBITER FUNCTIONS

As noted above and as further described below, the disclosed embodiments may provide different architecture configurations and deployments to achieve resiliency and fault tolerance goals.

### SIMPLE SEQUENCE COMPARE

FIG. 10 depicts a block diagram of a system 1000 for providing resiliency in a cloud environment according to some embodiments.

In some embodiments, a "Simple Sequence Compare" architecture may be used. In this case, one processing pipeline 312 may be instantiated per region and a zonal failure may be treated as a regional failure to conserve resources. When a service, zone, or region fails, the arbiter 316 may seamlessly continue to process data from another region. For example, if region A or Region A - Zone 1 fails, the arbiter 316 may process data from Region B. In other words, in this configuration, arbiter 316 may forward the first available output that is received by the arbiter 316.

Since manual intervention is not necessary if a region fails, the "Simple Sequence Compare" configuration improves fault recovery of the system. Since other redundant pipelines 312 are located in different regions, other pipelines 312 are ready to deliver the output in case of a pipeline 312 failure.

### ZERO DOWNTIME DEPLOYMENT, SEQUENCE, AND FUNCTIONAL COMPARE

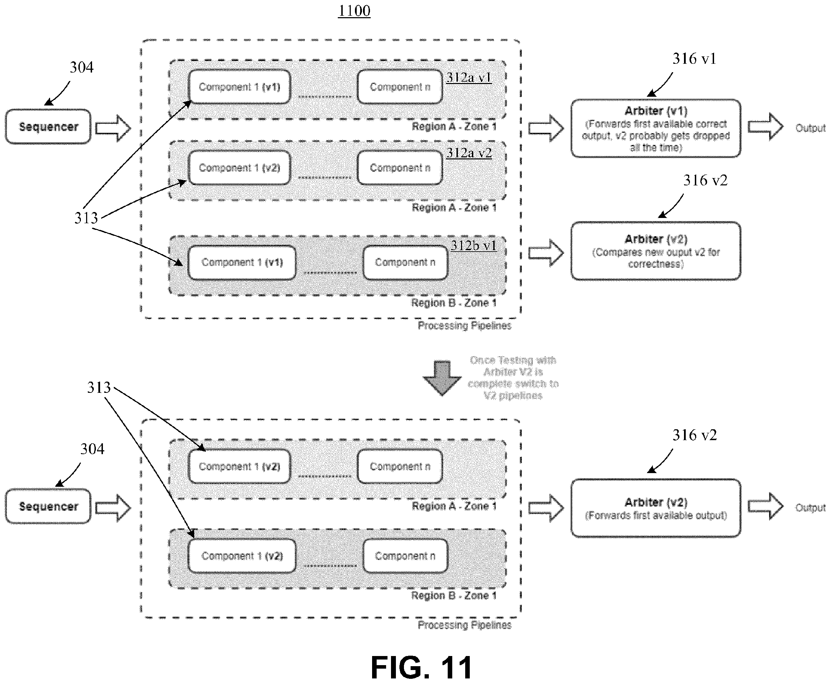

FIG. 11 depicts a block diagram of a system 1100 for providing testing in a cloud environment according to an alternate embodiment.

In some embodiments, as shown in FIG. 11, a "Zero Downtime Deployment, Sequence and Functional Compare" configuration may be used to test a new version of software in a pipeline 312. In this configuration, to test a new version v2, the system 1100 may include redundant processing pipelines 312a v1 (version 1 of the processing pipeline 312a) and 312b v2 (version 2 of the processing pipeline 312b) that may be located in at least one region. The system 1100 may include an arbiter 316 v1 that forwards the first available correct output. In some embodiments, the output v2 is dropped until the new version is validated. The system 1100 may also include an upgraded arbiter 316 v2 that is configured to understand the difference in the new generated output streams and to compare the old output v1 and the new output v2 for backwards compatibility and correctness. The upgraded arbiter 316 v2 is configured to not produce outputs for recipients 318 such as consumers. Once the new version of the software is verified, all the pipelines 312 and the arbiter 316 v2 may be upgraded to the new version v2.

To perform the upgrade without pause, the sequencer 304 may be configured to mark an input or insert a metadata input for sequence n, starting with which arbiter 316a v1 would cease to produce output for recipients 318 such as consumers and starting with which arbiter 316 v2 would begin to produce output for recipients 318 such as consumers. Alternately, the sequencer 304 may be configured to temporarily queue the inbound traffic so the arbiters 316a v1 and 316 v2 may be safely swapped with no incoming messages/inputs in process. Otherwise, a time window, e.g., 45 minutes, may be used to perform the upgrade. The new processing pipelines 312 v2 replace the old processing pipelines 312 v1 which may be removed or dropped in any order and at any time since the Arbiter 316 v2 will take care of rejecting the output v1.

Rollback database scripts are unnecessary to deliver a single database schema with compatibility across the two versions of the software since each software version runs in its own processing pipeline 312. Further, rollback database scripts are unnecessary to recover from a failure since the system 1100 removes the new processing pipeline 312 v2 and continues using the old processing pipeline 312 v1.

### BUG DETECTION AND RECOVERY

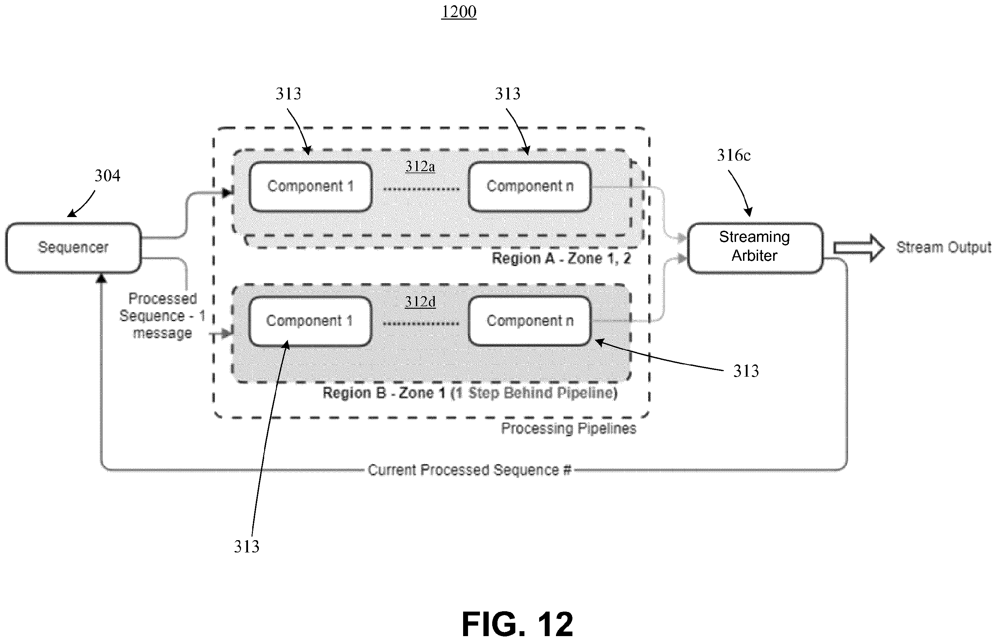

FIG. 12 depicts a block diagram of a system 1200 for providing a step behind pipeline configuration according to an alternate embodiment.

In this configuration, one or more processing pipelines 312d may run a step behind the other processing pipelines 312a through feedback from the streaming arbiter 316c. The streaming arbiter 316c may inform the sequencer 304 of the current successfully processed sequence number. The sequencer 304 ensures that one of the pipelines 312d always stays one step behind the others in processing the sequence.

In case of a complete failure of a processing pipeline 312 while processing an incoming message having a sequence number (e.g., none of the "ahead running pipelines" 312a produce an output in the required amount of time) an automated or manual recovery may be performed. As a first step in recovery, processing may be paused. The failed pipelines 312b may be restarted to recover the state from the healthy pipeline 312d. The sequencer 304 may then jump ahead in sequence to avoid the faulty sequence number. Note: The jumped ahead sequence may also fail and so the process should account for the "current good state" and keep jumping ahead until processing can be resumed. It depends on the application use case if certain sequences can actually be discarded or if manual intervention is needed to decide what to do with failed sequences.

### CONCLUSION

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the described embodiments should not be understood as requiring such separation in all embodiments, and it should be understood that the described program components and systems can generally be integrated together in a single software product or packaged into multiple software products.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is therefore intended that the foregoing detailed description be regarded as illustrative rather than limiting, and that it be understood that it is the following claims, including all equivalents, that are intended to define the spirit and scope of this invention.

Further embodiments of the invention are illustrated by the following numbered clauses:
Clause 1. A transaction processing system comprising: a sequencer server instance configured to receive, via a first data path, an incoming request message from a source, sequence the received incoming request message by augmenting the received incoming request message with a unique identifier which characterizes an order of receipt of the received incoming request message relative to other prior or subsequently received incoming request messages, and forward a copy of the sequenced incoming request message to each of a plurality of transaction processing server instances via a second data path; each of the plurality of transaction processing server instances coupled with the sequencer server instance, each of the plurality of transaction processing server instances configured to implement a plurality of processing components coupled with each other, wherein each of the plurality of transaction processing server instances is configured to receive a copy of the incoming sequenced request message for a transaction from the sequencer server instance, process the copy of the incoming sequenced request message using the plurality of processing components, generate a sequenced result message indicative thereof, and transmit the sequenced result message to an arbiter server instance via a third data path, wherein the sequenced result messages includes the unique identifier; and the arbiter server instance configured to: receive, from two or more subsets of the plurality of transaction processing server instances, one or more of the sequenced result messages having the same unique identifier; and select a sequenced result message from among the one or more of the received sequenced result messages based on a selection algorithm which determines the earliest received identical sequenced result messages received from a majority of the transaction processing server instances of a single subset of the plurality of transaction processing server instances; and transmit the selected sequenced result message to a recipient over a fourth data path.
Clause 2. The system of clause 1, wherein a first subset of the plurality of transaction processing server instances is located in a first region, and wherein a second subset of the plurality of transaction processing server instances is located in a second region different from the first region.
Clause 3. The system of clause 1, wherein each of the plurality of transaction processing server instances are located in a different logical zone.
Clause 4. The system of clause 1, wherein the arbiter server instance is configured to determine that a sequenced result message with the same unique identifier has not been previously transmitted to the recipient.
Clause 5. The system of clause 1, wherein at least one of the two or more subsets includes only one transaction processing server instance.
Clause 6. The system of clause 1, wherein the sequencer server instance is located in a same region as one of the two or more subsets.
Clause 7. The system of clause 1, wherein the arbiter server instance is located in a same region as one of the two or more subsets.
Clause 8. The system of clause 1, wherein the second data path comprises at least one asynchronous middleware publisher coupled between the sequencer server instance and each of the plurality of transaction processing server instances.
Clause 9. The system of clause 8, wherein the at least one middleware publisher is configured to store the copy of the incoming request message during a time window that does not exceed a time threshold.
Clause 10. The system of clause 1, wherein the third data path comprises at least one middleware subscriber coupled between each of the plurality of transaction processing server instances and the arbiter server instance.
Clause 11. The system of clause 1, wherein the arbiter server instance is configured to select the selected sequenced result message if the selected sequenced result message is received earliest.
Clause 12. The system of clause 1, wherein the arbiter server instance is configured to select the sequenced result message based on the sequenced result messages from the one or more of the sequenced result messages received in accordance with a predetermined threshold value.
Clause 13. The system of clause 12, wherein the predetermined threshold includes a time value or a number of received sequenced result messages value.
Clause 14. The system of clause 1, wherein each of the one or more of the sequenced result messages includes an output of the processing and data indicative of a region, and wherein the arbiter server instance is configured to select the sequenced result message from the one or more of the sequenced result messages if a majority of the plurality of the transaction processing server instances within the same region independently arrive at the same output of the selected sequenced result message.
Clause 15. The system of clause 1, wherein the selection algorithm is based on a consensus process including location, error detection, error correction, quorum, or a number of transaction processing server instances.
Clause 16. The system of clause 1, wherein the sequence server instance, each of the plurality of transaction processing server instances, and the arbiter server instance are implemented as virtual machine servers.
Clause 17. The system of clause 1, wherein the arbiter server instance is one of a plurality of arbiter server instances, wherein the plurality of transaction processing server instances includes a first version of the a transaction processing server instance prior to a modification and a second version of the transaction processing server instance as modified by the modification, wherein the first version of the transaction processing server instance generates a first version of the sequenced result message and the second version of the transaction processing server instance generates a second version of the sequenced result message; wherein the plurality of arbiter server instances includes a first version of the arbiter server instance prior to the modification and a second version of the arbiter server instance as modified by the modification, and wherein the system further comprises an arbiter selector server instance configured to: perform validation by determination of whether an output of the second version of the sequenced result message is valid or invalid; and prevent the second version of the arbiter server from transmitting the second version of the sequenced result message to the recipient until validation is performed.
Clause 18. The system of clause 17, wherein upon the arbiter selector server instance determining that the output of the second version of the arbiter server instance is valid, the arbiter selector server instance is configured to cause the first version of the transaction processing server instance and the first version of the arbiter server instance to be discarded from the system and to cause the second version of the arbiter server instance to transmit the second version of the sequenced result message to the recipient.
Clause 19. The system of clause 17, wherein upon the arbiter selector server instance determining that the output of the second version of the arbiter server instance is invalid, the arbiter selector server instance is configured to cause the second version of the transaction processing server instance and the second version of the arbiter server instance to be discarded from the system.
Clause 20. The system of clause 1, wherein each of the plurality of components is characterized by a current state and configured to perform one or more of receiving an electronic message, processing the received electronic message and generating an electronic result message indicative of a result of an operation which may alter the current state thereof.
Clause 21. The system of clause 1, wherein each of the plurality of transaction processing instances processes the copy of the incoming sequenced request message by identifying a previously received sequenced request message for a transaction counter thereto in an attempt to satisfy one or both of the copy of the incoming sequenced request message and the previously received sequenced request message.
Clause 22. A computer implemented method comprising: receiving, by a sequencer server instance, via a first data path, an incoming request message from a source; sequencing, by the sequencer server instance, the received incoming request message, by augmenting the received incoming request message with a unique identifier which characterizes an order of receipt of the received incoming request message relative to other prior or subsequently received incoming request messages; forwarding, by the sequencer server instance, a copy of the sequenced incoming request message to each of a plurality of transaction processing server instances via a second data path; implementing, by the plurality of transaction processing server instances, a plurality of processing components coupled with each other; receiving, by the plurality of transaction processing server instances, a copy of the incoming sequenced request message for a transaction from the sequencer server instance; processing, by the plurality of transaction processing server instances, the copy of the incoming sequenced request message using the plurality of processing components; generating, by the plurality of transaction processing server instances, a sequenced result message indicative thereof; transmitting, by the plurality of transaction processing servers, the sequenced result message to an arbiter server instance via a third data path, wherein the sequenced result messages includes the unique identifier; receiving, by the arbiter server instance from two or more subsets of the plurality of transaction processing server instances, one or more of the sequenced result messages having the same unique identifier; selecting, by the arbiter server instance, a sequenced result message from among the one or more of the received sequenced result messages based on a selection algorithm which determines the earliest received identical sequenced result messages received from a majority of the transaction processing server instances of a single subset of the plurality of transaction processing server instances; and transmitting, by the arbiter server instance, the selected sequenced result message to a recipient over a fourth data path.
Clause 23. The computer implemented method of clause 22, wherein a first subset of the plurality of transaction processing server instances is located in a first region, and wherein a second subset of the plurality of transaction processing server instances is located in a second region different from the first region.
Clause 24. The computer implemented method of clause 22, wherein each of the plurality of transaction processing server instances are located in a different logical zone.
Clause 25. The computer implemented method of clause 22, further comprising: determining, by the arbiter server instance, that a sequenced result message with the same unique identifier has not been previously transmitted to the recipient.
Clause 26. The computer implemented method of clause 22, wherein the second data path comprises at least one asynchronous middleware publisher coupled between the sequencer server instance and each of the plurality of transaction processing server instances.
Clause 27. The computer implemented method of clause 26, further comprising: storing, by the at least one middleware publisher, the copy of the incoming request message during a time window that does not exceed a time threshold.
Clause 28. The computer implemented method of clause 22, wherein the third data path comprises at least one middleware subscriber coupled between each of the plurality of transaction processing server instances and the arbiter server instance.
Clause 29. The computer implemented method of clause 22, further comprising: selecting, by the arbiter server instance, the selected sequenced result message if the selected sequenced result message is received earliest.
Clause 30. The computer implemented method of clause 22, further comprising: selecting, by the arbiter server instance, the sequenced result message based on the sequenced result messages from the one or more of the sequenced result messages received in accordance with a predetermined threshold value.
Clause 31. The computer implemented method of clause 30, wherein the predetermined threshold includes a time value or a number of received sequenced result messages value.
Clause 32. The computer implemented method of clause 22, determining, by the arbiter server instance, that a majority of the plurality of the transaction processing server instances within the same region independently arrive at a same output of the selected sequenced result message; and selecting, by the arbiter server instance, the sequenced result message from the one or more of the sequenced result messages, each of the one or more of the sequenced result messages including the output of the processing and data indicative of a region.
Clause 33. The method of clause 22, wherein the selection algorithm is based on a consensus process including location, error detection, error correction, quorum, or a number of transaction processing server instances.
Clause 34. The computer implemented method of clause 22, wherein the arbiter server instance is one of a plurality of arbiter server instances each located at one of a plurality of different locations.
Clause 35. The computer implemented method of clause 22, further comprising: generating, by a first version of a transaction processing server instance of the plurality of transaction processing servers instances prior to a modification, a first version of the sequenced result message; generating, by a second version of a transaction processing server instance of the plurality of transaction processing server instances as modified by the modification, a second version of the sequenced result message; performing, by an arbiter selector server instance, a validation by determining whether an output of the second version of the sequenced result message is valid or invalid; and preventing, by the arbiter selector server instance, a second version of the arbiter server as modified by the modification, from transmitting the second version of the sequenced result message to the recipient until validation is performed.
Clause 36. The computer implemented method of clause 35, determining, by the arbiter selector server instance that the output of the second version of the arbiter server instance is valid; causing, by the arbiter selector server instance, the first version of the transaction processing server instance and a first version of the arbiter server instance prior to the modification to be discarded; and causing, by the arbiter selector server instance, the second version of the arbiter server instance to transmit the second version of the sequenced result message to the recipient.
Clause 37. The computer implemented method of clause 35, determining, by the arbiter selector server instance, that the output of the second version of the arbiter server instance is invalid; and causing, by the arbiter selector server instance, the second version of the transaction processing server instance and the second version of the arbiter server instance to be discarded.
Clause 38. The computer implemented method of clause 22, further comprising: performing, by each of the plurality of components characterized by a current state, one or more of receiving an electronic message, processing the received electronic message and generating an electronic result message indicative of a result of an operation which may alter the current state thereof.
Clause 39. The computer implemented method of clause 22, further comprising: processing, by the transaction processing server instances, the copy of the incoming sequenced request message by identifying a previously received sequenced request message for a transaction counter thereto in an attempt to satisfy one or both of the copy of the incoming sequenced request message and the previously received sequenced request message.
Clause 40. A system comprising: means for receiving, via a first data path, an incoming request message from a source; means for sequencing the received incoming request message, by augmenting the received incoming request message with a unique identifier which characterizes an order of receipt of the received incoming request message relative to other prior or subsequently received incoming request messages; means for forwarding a copy of the sequenced incoming request message via a second data path; means for implementing a plurality of processing components coupled with each other; means for receiving a copy of the incoming sequenced request message for a transaction; means for processing the copy of the incoming sequenced request message using the plurality of processing components; means for generating a sequenced result message indicative thereof; means for transmitting the sequenced result message via a third data path, wherein the sequenced result messages includes the unique identifier; means for receiving, from two or more subsets, one or more of the sequenced result messages having the same unique identifier; means for selecting a sequenced result message from among the one or more of the received sequenced result messages based on a selection algorithm which determines the earliest received identical sequenced result messages received from a majority of a single subset; and means for transmitting the selected sequenced result message to a recipient over a fourth data path.

## Claims

1. A computer implemented method comprising:
receiving, by a sequencer server instance, via a first data path, an incoming request message from a source;
sequencing, by the sequencer server instance, the received incoming request message, by augmenting the received incoming request message with a unique identifier which characterizes an order of receipt of the received incoming request message relative to other prior or subsequently received incoming request messages;
forwarding, by the sequencer server instance, a copy of the sequenced incoming request message to each of a plurality of transaction processing server instances via a second data path;
implementing, by the plurality of transaction processing server instances, a plurality of processing components coupled with each other;
receiving, by the plurality of transaction processing server instances, a copy of the incoming sequenced request message for a transaction from the sequencer server instance;
processing, by the plurality of transaction processing server instances, the copy of the incoming sequenced request message using the plurality of processing components;
generating, by the plurality of transaction processing server instances, a sequenced result message indicative thereof;
transmitting, by the plurality of transaction processing servers, the sequenced result message to an arbiter server instance via a third data path, wherein the sequenced result messages includes the unique identifier;
receiving, by the arbiter server instance from two or more subsets of the plurality of transaction processing server instances, one or more of the sequenced result messages having the same unique identifier;
selecting, by the arbiter server instance, a sequenced result message from among the one or more of the received sequenced result messages based on a selection algorithm which determines the earliest received identical sequenced result messages received from a majority of the transaction processing server instances of a single subset of the plurality of transaction processing server instances; and
transmitting, by the arbiter server instance, the selected sequenced result message to a recipient over a fourth data path.

2. The computer implemented method of claim 1,
wherein a first subset of the plurality of transaction processing server instances is located in a first region, and
wherein a second subset of the plurality of transaction processing server instances is located in a second region different from the first region.

3. The computer implemented method of claim 1,
wherein each of the plurality of transaction processing server instances are located in a different logical zone.

4. The computer implemented method any preceding claim, further comprising:
determining, by the arbiter server instance, that a sequenced result message with the same unique identifier has not been previously transmitted to the recipient.

5. The computer implemented method of any preceding claim, wherein the second data path comprises at least one asynchronous middleware publisher coupled between the sequencer server instance and each of the plurality of transaction processing server instances.

6. The computer implemented method of claim 5, further comprising:
storing, by the at least one middleware publisher, the copy of the incoming request message during a time window that does not exceed a time threshold.

7. The computer implemented method of any preceding claim, wherein the third data path comprises at least one middleware subscriber coupled between each of the plurality of transaction processing server instances and the arbiter server instance.

8. The computer implemented method of any preceding claim, further comprising:
selecting, by the arbiter server instance, the selected sequenced result message:
if the selected sequenced result message is received earliest.

9. The computer implemented method of any one of claims 1 to 7, further comprising:
selecting, by the arbiter server instance, the sequenced result message based on the sequenced result messages from the one or more of the sequenced result messages received in accordance with a predetermined threshold value, wherein the predetermined threshold optionally includes a time value or a number of received sequenced result messages value.

10. The computer implemented method of any one of claims 1 to 7,
determining, by the arbiter server instance, that a majority of the plurality of the transaction processing server instances within the same region independently arrive at a same output of the selected sequenced result message; and
selecting, by the arbiter server instance, the sequenced result message from the one or more of the sequenced result messages, each of the one or more of the sequenced result messages including the output of the processing and data indicative of a region.

11. The method of any preceding claim, wherein the selection algorithm is based on a consensus process including location, error detection, error correction, quorum, or a number of transaction processing server instances.

12. The computer implemented method of any preceding claim, wherein the arbiter server instance is one of a plurality of arbiter server instances each located at one of a plurality of different locations.

13. The computer implemented method of any preceding claim, further comprising:
generating, by a first version of a transaction processing server instance of the plurality of transaction processing servers instances prior to a modification, a first version of the sequenced result message;
generating, by a second version of a transaction processing server instance of the plurality of transaction processing server instances as modified by the modification, a second version of the sequenced result message;
performing, by an arbiter selector server instance, a validation by determining whether an output of the second version of the sequenced result message is valid or invalid; and
preventing, by the arbiter selector server instance, a second version of the arbiter server as modified by the modification, from transmitting the second version of the sequenced result message to the recipient until validation is performed.

14. The computer implemented method of claim 13,
determining, by the arbiter selector server instance that the output of the second version of the arbiter server instance is valid;
causing, by the arbiter selector server instance, the first version of the transaction processing server instance and a first version of the arbiter server instance prior to the modification to be discarded; and
causing, by the arbiter selector server instance, the second version of the arbiter server instance to transmit the second version of the sequenced result message to the recipient.

15. The computer implemented method of claim 13,
determining, by the arbiter selector server instance, that the output of the second version of the arbiter server instance is invalid; and
causing, by the arbiter selector server instance, the second version of the transaction processing server instance and the second version of the arbiter server instance to be discarded.

16. The computer implemented method of any preceding claim, further comprising:
performing, by each of the plurality of components **characterized by** a current state, one or more of receiving an electronic message, processing the received electronic message and generating an electronic result message indicative of a result of an operation which may alter the current state thereof.

17. The computer implemented method of any preceding claim, further comprising:
processing, by the transaction processing server instances, the copy of the incoming sequenced request message by identifying a previously received sequenced request message for a transaction counter thereto in an attempt to satisfy one or both of the copy of the incoming sequenced request message and the previously received sequenced request message.

18. A transaction processing system configured to perform the method of any preceding claim, the transaction processing system comprising:
a sequencer server instance configured to receive, via a first data path, an incoming request message from a source, sequence the received incoming request message by augmenting the received incoming request message with a unique identifier which characterizes an order of receipt of the received incoming request message relative to other prior or subsequently received incoming request messages, and forward a copy of the sequenced incoming request message to each of a plurality of transaction processing server instances via a second data path;
each of the plurality of transaction processing server instances coupled with the sequencer server instance, each of the plurality of transaction processing server instances configured to implement a plurality of processing components coupled with each other, wherein each of the plurality of transaction processing server instances is configured to receive a copy of the incoming sequenced request message for a transaction from the sequencer server instance, process the copy of the incoming sequenced request message using the plurality of processing components, generate a sequenced result message indicative thereof, and transmit the sequenced result message to an arbiter server instance via a third data path, wherein the sequenced result messages includes the unique identifier; and
the arbiter server instance configured to:
receive, from two or more subsets of the plurality of transaction processing server instances, one or more of the sequenced result messages having the same unique identifier; and
select a sequenced result message from among the one or more of the received sequenced result messages based on a selection algorithm which determines the earliest received identical sequenced result messages received from a majority of the transaction processing server instances of a single subset of the plurality of transaction processing server instances; and
transmit the selected sequenced result message to a recipient over a fourth data path.

19. The system of claim 18, wherein at least one of the two or more subsets includes only one transaction processing server instance.

20. The system of claim 18 or 19, wherein the sequencer server instance or the arbiter server instance is located in a same region as one of the two or more subsets.

21. The system of any one of claims 18 to 20, wherein the sequence server instance, each of the plurality of transaction processing server instances, and the arbiter server instance are implemented as virtual machine servers.
